# EUROPEAN PATENT SPECIFICATION

(11) **EP 2 921 384 B1**
(45) Date of publication and mention of the grant of the patent: **18.04.2018**
(21) Application number: 13864290.5
(22) Date of filing: 18.12.2013
(51) Int. Cl.: B62K 5/027, B62J 17/02, B62J 15/00, B62K 5/05, B62K 5/08, B62K 5/10

(54) **VEHICLE**
FAHRZEUG
VÉHICULE

(30) Priority: 18.12.2012 JP 2012276257; 01.07.2013 JP 2013138481; 01.07.2013 JP 2013138482; 01.07.2013 JP 2013138483
(43) Date of publication of application: 23.09.2015
(73) Proprietor: Yamaha Hatsudoki Kabushiki Kaisha, Iwata-shi, Shizuoka 438-8501 (JP)
(72) Inventor: HIRAYAMA Yosuke, Iwata-shi Shizuoka 438-8501 (JP)
(74) Representative: Grünecker Patent- und Rechtsanwälte PartG mbB
(86) International application number: PCT/JP2013/083937
(87) International publication number: WO 2014/098144

(56) References cited:
- EP-A1- 0 502 830
- EP-A1- 0 705 756
- WO-A1-2012/007819
- CN-Y- 201 231 824
- DE-A1-102010 052 716
- JP-A- S6 218 379
- JP-A- H07 144 671
- JP-A- 2012 056 503
- US-A- 4 822 067
- US-A1- 2009 152 940
- US-S1- D 547 242
- US-S1- D 656 435
- Piaggio: "CATALOGO PARTI DI RICAMBIO MP3 300 ie LT Touring 2011-2013", , 1 June 2011 (2011-06-01), XP055276469, Retrieved from the Internet: URL:http://www.fratellischiattarella.it/wp -content/uploads/2014/01/MP3-300-ie-LT-Tou ring-2011-2013.pdf [retrieved on 2016-05-30]

## Description

The present invention relates to a vehicle **according to the preamble of independent claim 1. Such a vehicle can be taken from the prior art document** DE 10 2010 052 716 A1**.**

It is known a vehicle which comprises a vehicle body frame that is leanable leftward or rightward when the vehicle is cornering, and two front wheels that are arranged side by side in a left-right direction of the vehicle body frame (for example, see Patent Documents 1 and 2).

### Prior Art Document

### Patent Document

[Patent Document 1] US Design Patent No. D547,242
[Patent Document 2] US Patent No. 7,073,806

A front portion of this type of vehicle tends to be enlarged. Then, in the vehicles described in Patent Documents 1 and 2, the link mechanism is disposed above the two front wheels so as to narrow the space formed therebetween, whereby realizing a reduction in size of the front portion of the vehicle in relation to the left-right direction of the vehicle body frame. However, in the vehicle comprising two front wheels an interval therebetween of which is narrowed, the vehicle body cover covering the link mechanism extends, under a condition that the vehicle is in the upright state, frontward than front ends of the two front wheels and downward than upper ends of the two front wheels. Consequently, it is difficult to reduce the size of the front portion of the vehicle in relation to the front-rear direction of the vehicle body frame.

An attempt was made to reduce the size of the vehicle body cover in relation to the front-rear direction of the vehicle body frame. Specifically, the shape of the vehicle body cover was changed so that a front end of the vehicle body cover was disposed behind the front ends of the two front wheels, the space between which was narrowed, in such a state that the vehicle is in the upright state. As a result, although it was possible to decrease the size of the front portion of the vehicle, it was found that the maximum speed of the vehicle may decrease, or fuel consumption may deteriorate.

Consequently, an object of the invention is to make a vehicle **as indicated above** smaller in size while maintaining the traveling performance of the vehicle.

### According to the present invention said object is solved by a vehicle having the features of independent claim 1. Preferred embodiments are laid down in the dependent claims.

In order to achieve the object, according to an aspect of the invention, there is provided a vehicle comprising:
a vehicle body frame;
a handlebar provided so as to be able to turn relative to the vehicle body frame;
a vehicle body cover at least part of which covers the vehicle body frame;
a right front wheel and a left front wheel arranged side by side in a left-right direction of the vehicle body frame;
a steering mechanism configured to transmit turning of the handlebar to the right front wheel and the left front wheel;
a link mechanism disposed above the right front wheel and the left front wheel, and configured to cause the vehicle body frame to lean relative to
   a vertical direction by changing positions of the right front wheel and the left front wheel relative to the vehicle body frame; and
a power unit supported by the vehicle body frame and including a drive source,
wherein the vehicle body cover includes:
   a link cover part covering at least part of the link mechanism, being provided so as not to be able to displace relative to the vehicle body frame, having a front portion disposed ahead of respective rear ends of the right front wheel and the left front wheel in a front-rear direction of the vehicle body frame, and as seen from front of the vehicle in the front-rear direction of the vehicle body frame under a condition that the vehicle body frame is in an upright state, being arranged such that a front end of the front portion is disposed behind respective front ends of the right front wheel and the left front wheel in the front-rear direction of the vehicle body frame, under a condition that the vehicle body frame is in an upright state; and
   an aerodynamic part configured to reduce wind pressure received, during travelling of the vehicle, by at least one of part of the vehicle body frame, part of the vehicle body cover, and part of the power unit, any one of which is located below the link mechanism in an up-down direction of the vehicle body frame, on the left of the right front wheel in a left-right direction of the vehicle body frame, on the right of the left front wheel in the left-right direction of the vehicle body frame, as seen from a front side in the front-rear direction of the vehicle body frame of the vehicle under the condition that the vehicle body frame is in the upright state, and is located behind the right front wheel and the left front wheel in the front-rear direction of the vehicle body frame, as seen from sideways of the vehicle body frame of the vehicle under the condition that the vehicle body frame is in the upright state, provided so as to be able to displace relative to the vehicle body frame in accordance with operation of the steering mechanism, and arranged such that a lower end thereof is disposed below the lower end of the front part portion of the link cover part.

In order to find out a cause that traveling performance is degraded, wind pressure received by the vehicle during traveling was analyzed for each of the vehicle body covers having various shapes. As a result, it has been found that the part of the vehicle body cover extending downward than the respective front ends of the right front wheel and the left front wheel arranged with a narrowed space reduces the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Additionally, it has also been found that the wind pressure increases air resistance generated by air flow passing through an area located on the left of the right front wheel in the left-right direction of the vehicle body frame, and an area located on the right of the left front wheel in the left-right direction of the vehicle body frame. Further, it has been found that the reduction of the wind pressure can contribute to the maintenance of the traveling performance of the vehicle.

In addition, it has been found that the vehicle body cover not only serves to cover at least part of the link mechanism but also serves to reduce wind pressure. Accordingly, the vehicle body cover is divided in accordance with the functions thereof into the part (the link cover part) that essentially serves to cover at least part of the link mechanism and the part (the aerodynamic part) that serves to contribute to the wind pressure reduction. Then it has been considered suitable position and shape for each of the individual functional parts.

In the vehicle comprising the leanable vehicle body frame and the link mechanism, the right front wheel and the left front wheel each have a wide movable range. Consequently, there may be largely changed the positions and sizes of areas that are located below the link mechanism in the up-down direction of the vehicle body frame, on the left of the right front wheel in the left-right direction of the vehicle body frame, and on the right of the left front wheel in the left-right direction of the vehicle body frame, in accordance with the operation of the steering mechanism. In a case where the configuration in which the part serving as the aerodynamic part is provided so as not to be able to displace relative to the vehicle body frame, the aerodynamic part needs to be provided so as to cover the whole of the areas that change so largely to whereby deflect air flow incoming to the areas. This enlarges the portion that serves as the aerodynamic parts.

The aerodynamic part that is provided on the vehicle according to the invention is provided so as to be able to displace relative to the vehicle body frame in accordance with the operation of the steering mechanism. Namely, even though the positions and sizes of areas that are located below the link mechanism in the up-down direction of the vehicle body frame, on the left of the right front wheel in the left-right direction of the vehicle body frame, and on the right of the left front wheel in the left-right direction of the vehicle body frame are changed in accordance with the operation of the steering mechanism, the aerodynamic part can be moved in accordance with such changes. In addition, the lower end of the aerodynamic part is disposed below the lower edge of the front portion of the link cover part in the up-down direction of the vehicle body frame. Accordingly, it is easy to reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from the front side of the vehicle body frame of the vehicle under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Consequently, the aerodynamic part that is provided on the vehicle according to the invention can be made smaller in size even though the aerodynamic part is given the same aerodynamic function as that of the aerodynamic part that is provided so as not to be able to displace relative to the vehicle body frame irrespective of how the steering mechanism operates. With this configuration, even though the aerodynamic part is made smaller in size, it is possible to restrict increase in wind pressure that the vehicle receives.

In addition, the link cover part is provided so as not to be able to displace relative to the vehicle body frame and covers at least part of the link mechanism. In the link cover part, at least part of the function to contribute to the wind pressure reduction is divided into the aerodynamic part. Thus, the degree of freedom in design of the link cover part can be enhanced. In addition, by separating part of the functions that the link cover part has to perform, the link cover part can be formed smaller. Specifically, the link cover part has a front portion that is disposed ahead of respective rear ends of the right front wheel and the left front wheel in the front-rear direction of the vehicle body frame. The front end of the front portion is disposed behind respective front ends of the right front wheel and the left front wheel in the front-rear direction of the vehicle body frame, under the condition that the vehicle body frame is in the upright state. Namely, the vehicle body cover is made smaller in size in relation to the left-right direction of the vehicle body frame by narrowing the space between the right front wheel and the left front wheel. In addition, the vehicle body cover is made smaller in size in relation to the front-rear direction of the vehicle body frame.

Thus, as has been described heretofore, according to the vehicle of the invention, the link cover part can be formed smaller in size by separating therefrom at least part of the function to contribute to the wind pressure reduction. In addition, the link cover part can also be formed smaller by providing the aerodynamic part which is able to displace relative to the vehicle body frame in accordance with the operation of the steering mechanism so as to contribute to the wind pressure reduction. Consequently, the front portion of the vehicle can be made smaller in size while maintaining the traveling performance of the vehicle comprising the leanable vehicle body frame and the two front wheels.

The vehicle may be configured such that a front edge of the aerodynamic part is so slanted that at least one of an upper end thereof and a lower end thereof is located behind a front end thereof, as seen from the sideways of the vehicle body frame of the vehicle under the condition that the vehicle body frame is in the upright state.

According to this configuration, it is changed, in the up-down direction of the vehicle body frame along the slanted portion of the protecting part, the direction of air flowing toward at least one of part of the vehicle body frame, part of the vehicle body cover and part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and located behind the right front wheel and the left front wheel in the front-rear direction of the vehicle body frame, as seen from the sideways of the vehicle body frame of the vehicle under the condition that the vehicle body frame is in the upright state. Accordingly, it is possible to reduce wind pressure received, during the traveling of the vehicle, by at least one of part of the vehicle body frame, part of the vehicle body cover and part of the power unit, any one of which is located below the link mechanism in the up-down direction of the vehicle body frame, on the left of the right front wheel in the left-right direction of the vehicle body frame, on the right of the left front wheel in the left-right direction of the vehicle body frame, and behind the right front wheel and the left front wheel in the front-rear direction of the vehicle body frame, as seen from front of the vehicle in the front-rear direction of the vehicle body frame under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that a front edge of the aerodynamic part is so slanted that at least one of a right end thereof and a left end thereof is located behind a front end thereof, as seen from above of the vehicle body frame of the vehicle under the condition that the vehicle body frame is in the upright state.

According to this configuration, it is changed, in the left-right direction of the vehicle body frame along the slanted portion of the protecting part, the direction of air flowing toward at least one of part of the vehicle body frame, part of the vehicle body cover and part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and located behind the right front wheel and the left front wheel in the front-rear direction of the vehicle body frame, as seen from the sideways of the vehicle body frame of the vehicle under the condition that the vehicle body frame is in the upright state. Accordingly, it is possible to reduce wind pressure received, during the traveling of the vehicle, by at least one of part of the vehicle body frame, part of the vehicle body cover and part of the power unit, any one of which is located below the link mechanism in the up-down direction of the vehicle body frame, on the left of the right front wheel in the left-right direction of the vehicle body frame, on the right of the left front wheel in the left-right direction of the vehicle body frame, and behind the right front wheel and the left front wheel in the front-rear direction of the vehicle body frame, as seen from front of the vehicle in the front-rear direction of the vehicle body frame under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that a lower end of the front portion of the link cover part is disposed above respective upper ends of the right front wheel and the left front wheel in the up-down direction of the vehicle body frame, under the condition that the vehicle body frame is in the upright state.

According to this arrangement, the degree of contribution to the wind pressure reduction of the link cover part can be decreased since the lower end of the front portion of the link cover part is disposed above the respective upper ends of the right front wheel and the left front wheel in the up-down direction of the vehicle body frame, under the condition that the vehicle body frame is in the upright state. Consequently, the front portion of the vehicle can be made further smaller in size while maintaining the traveling performance of the vehicle comprising the leanable vehicle body frame and the two front wheels.

The vehicle may be configured such that the lower end of the aerodynamic part is disposed below respective upper ends of the right front wheel and the left front wheel in the up-down direction of the vehicle body frame, under the condition that the vehicle body frame is in the upright state.

According to this arrangement, even though the lower end of the aerodynamic part is disposed below the respective upper ends of the right front wheel and the left front wheel, it is easy to avoid the interference with the right front wheel and the left front wheel since the protecting part is provided so as to be able to displace relative to the vehicle body frame in accordance with the operation of the steering mechanism. Accordingly, the enlargement of the aerodynamic part is restricted. Consequently, the front portion of the vehicle can be made further smaller in size while maintaining the traveling performance of the vehicle comprising the leanable vehicle body frame and the two front wheels.

The vehicle may be configured such that at least part of the aerodynamic part is disposed behind the respective front ends of the right front wheel and the left front wheel in the front-rear direction of the vehicle body frame, under the condition that the vehicle body frame is in the upright state.

According to this arrangement, it is possible to further reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Additionally, the right and left front wheels and the aerodynamic part are allowed to be made closer to each other while avoiding the interference of the aerodynamic part with the right and left front wheels that are being displaced. Therefore, the vehicle provided with the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that:
the steering mechanism includes a steering shaft to which the handlebar is attached; and
at least part of the aerodynamic part is disposed ahead of the steering shaft in the front-rear direction of the vehicle body frame, under the condition that the vehicle body frame is in the upright state.

According to this arrangement, it is easy to dispose the aerodynamic part so as to be spaced apart from at least one of part of the vehicle body frame, part of the vehicle body cover and part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the wheels and the vehicle body frame are in the upright state, and located behind the right front wheel and the left front wheel in the front-rear direction of the vehicle body frame, as seen from the sideways of the vehicle body frame of the vehicle under the condition that the vehicle body frame is in the upright state. Consequently, the degree of freedom in designing the aerodynamic part is increased, whereby wind pressure received by the portion of the vehicle that lies behind the steering shaft becomes easy to be reduced. Consequently, the front portion of the vehicle can be made further smaller in size while maintaining the traveling performance of the vehicle comprising the leanable vehicle body frame and the two front wheels.

The vehicle may be configured such that:
the steering mechanism includes:
   a right shock absorber supporting the right front wheel at a lower portion thereof, and configured to buffer displacement of the right front wheel in the up-down direction of the vehicle body frame relative to an upper portion thereof;
   a left shock absorber supporting the left front wheel at a lower portion thereof, and configured to buffer displacement of the left front wheel in the up-down direction of the vehicle body frame relative to an upper portion thereof;
   a right bracket to which the upper portion of the right shock absorber is fixed;
   a left bracket to which the upper portion of the left shock absorber is fixed;
   a steering shaft to which the handlebar is attached; and
   a transmission mechanism configured to transmit turning of steering shaft to the right bracket and the left bracket; and
the aerodynamic part is fixed to any one of the link mechanism, a pair of the right shock absorber and the left shock absorber, a pair of the right bracket and the left bracket, and the transmission mechanism.

According to the configuration described above, since the aerodynamic part is directly moved in accordance with the operation of the steering mechanism, the aerodynamic part is easy to be made smaller in size. Consequently, the front portion of the vehicle can be made further smaller in size while maintaining the traveling performance of the vehicle comprising the leanable vehicle body frame and the two front wheels.

The vehicle may be configured such that the aerodynamic part is fixed to the upper portion of the right shock absorber and the upper portion of the left shock absorber.

According to the configuration described above, even though the right front wheel and the left front wheel are displaced in the up-down direction of the vehicle body frame as a result of the operation of the right shock absorber and the left shock absorber, the aerodynamic part is prevented from being displaced in the same direction in association with the displacement of the right front wheel and the left front wheel in the up-down direction. Accordingly, it is possible to further reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that at least part of the aerodynamic part is disposed below the link mechanism in the up-down direction of the vehicle body frame, and disposed between the right front wheel and the left wheel, as seen from front of the vehicle in the front-rear direction of the vehicle body frame under the condition that the vehicle body frame is in the upright state.

According to this arrangement, it is possible to directly reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that at least part of the aerodynamic part is disposed at center in the left-right direction of the vehicle body frame, as seen from front of the vehicle in the front-rear direction of the vehicle body frame under the condition that the vehicle body frame is in the upright state.

According to this arrangement, it is possible to directly reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that:
the steering mechanism includes:
   a right shock absorber supporting the right front wheel at a lower portion thereof, and configured to buffer displacement of the right front wheel in the up-down direction of the vehicle body frame relative to an upper portion thereof; and
   a left shock absorber supporting the left front wheel at a lower portion thereof, and configured to buffer displacement of the left front wheel in the up-down direction of the vehicle body frame relative to an upper portion thereof; and
at least part of the aerodynamic part is disposed between the right shock absorber and the left shock absorber, as seen from front of the vehicle in the front-rear direction of the vehicle body frame under the condition that the vehicle body frame is in the upright state.

According to this arrangement, even when the right front wheel and the left front wheel are displaced in accordance with the right shock absorber and the left shock absorber, it is possible to directly reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

The vehicle may be configured such that the aerodynamic part has a dimension in the up-down direction of the vehicle body frame larger than a dimension in the left-right direction of the vehicle body frame, as seen from front of the vehicle in the front-rear direction of the vehicle body frame under the condition that the vehicle body frame is in the upright state.

According to this configuration, it is easy to narrow the space between the right front wheel and the left front wheel, whereby the body cover can be made smaller in size in relation to the left-right direction of the vehicle body frame. Additionally, it is possible to further reduce the wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. Therefore, the aerodynamic part having the function to contribute to the wind pressure reduction can be formed further smaller in size. Consequently, the front portion of the vehicle can be made further smaller in size while maintaining the traveling performance of the vehicle comprising the leanable vehicle body frame and the two front wheels.

### Brief Description of the Drawings

Fig. 1 is a left side view wherein an entire vehicle according to one embodiment of the invention is seen from left thereof.
Fig. 2 is a front view wherein a part of the vehicle shown in Fig. 1 is seen from front thereof.
Fig. 3 is a left side view wherein a part of the vehicle shown in Fig. 1 is seen from left thereof.
Fig. 4 is a plan view wherein a part of the vehicle shown in Fig. 1 is seen from above thereof.
Fig. 5 is a front view wherein a part of the vehicle shown in Fig. 1 is seen from front thereof.
Fig. 6 is a left side view wherein a part of the vehicle shown in Fig. 1 is seen from left thereof.
Fig. 7 is a plan view wherein a part of the vehicle shown in Fig. 1 is seen from above thereof when the vehicle is steered to the right.
Fig. 8 is a front view wherein a part of the vehicle shown in Fig. 1 is seen from front thereof when the vehicle is caused to lean leftward.
Fig. 9 is a view showing a modified example of the vehicle shown in Fig. 1.
Fig. 10 is a view showing a modified example of the vehicle shown in Fig. 1.
Fig. 11 is a view showing a modified example of the vehicle shown in Fig. 1.
Fig. 12 is a view showing a modified example of the vehicle shown in Fig. 1.
Fig. 13 is a view showing results for analyzing wind pressure received by a vehicle during traveling.
Fig. 14 is a view illustrating the effects of a protecting part provided on the vehicle shown in Fig. 1.
Fig. 15 is a view illustrating the effects of the protecting part provided on the vehicle shown in Fig. 1.
Fig. 16 is a view illustrating the effects of the protecting part provided on the vehicle shown in Fig. 1.
Fig. 17 is a view illustrating the effects of the protecting part provided on the vehicle shown in Fig. 1.
Fig. 18 is a view illustrating the shape of the protecting part provided on the vehicle shown in Fig. 1.
Fig. 19 is a view illustrating the shape of the protecting part provided on the vehicle shown in Fig. 1.

### Embodiment of the Invention

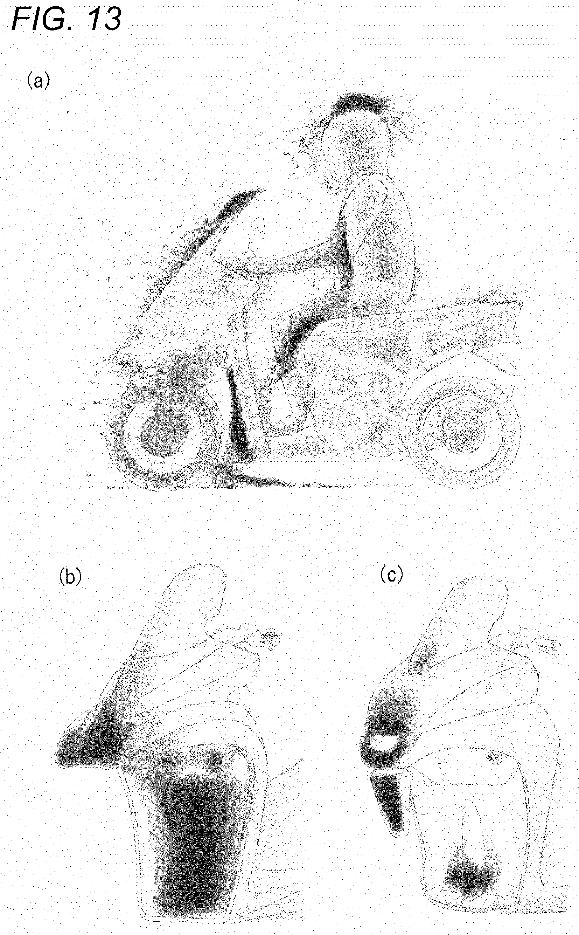

An attempt was made to reduce the size of the vehicle body cover in relation to the front-rear direction of the vehicle body frame. Specifically, wind pressure received by the vehicle during traveling was analyzed under a condition that the shape of the vehicle body cover was changed so that a front end of the vehicle body cover was disposed behind the front ends of the two front wheels arranged with a narrowed space, and disposed above the upper ends thereof in such a state that the vehicle is in the upright state. The results of the analysis are shown at (a) and (b) in Fig. 13. Darker portions on a vehicle and a rider indicate that they receive higher wind pressures. The results of a similar analysis for a body cover are shown at (c) in Fig. 13 which includes a portion that is extended frontward than the front ends and downward than the upper ends of the right front wheel and the left front wheel arranged with a narrowed space.

In view of the result of the analysis, it has been found that the part of the vehicle body cover extending downward than the respective front ends of the right front wheel and the left front wheel arranged with a narrowed space reduces air resistance generated by air flow passing through an area located on the left of the right front wheel in the left-right direction of the vehicle body frame, and an area located on the right of the left front wheel in the left-right direction of the vehicle body frame. It has been also found that this air resistance is caused by wind pressure received, during the traveling of the vehicle, by at least one of the part of the body frame, the part of the body cover, and the part of the power unit, any one of which is located below the link mechanism in the up-down direction of the vehicle body frame, on the left of the right front wheel in the left-right direction of the vehicle body frame, and on the right of the left front wheel in the left-right direction of the vehicle body frame, as seen from front of the vehicle in the front-rear direction of the vehicle body frame under the condition that the vehicle body frame is in the upright state, and is located behind the right front wheel and the left front wheel in the front-rear direction of the vehicle body frame, as seen from the sideways of the vehicle body frame of the vehicle under the condition that the vehicle body frame is in the upright state. It has been found that the traveling performance of the vehicle can be maintained by reducing the wind pressure. The functional portion that reduces the wind pressure that the vehicle receives in the way described above will be referred to as an aerodynamic part in the following description.

On the other hand, in the vehicle comprising the leanable vehicle body frame and the link mechanism, the right front wheel and the left front wheel each have a wide movable range. This is because the right front wheel and the left front wheel are turned when steered, are displaced in the up-down direction of the vehicle body frame as the right shock absorber and the left shock absorber extend or contract, and are displaced in the up-down direction of the vehicle body frame in accordance with the operation of the link mechanism. A vehicle body cover, that is provided so as not to be able to displace relative to the vehicle body frame, needs to ensure a long distance with respect to the right front wheel and the left front wheel, each of which has such a wide movable range, so as to avoid the interference therewith.

In a case where the lower end of the front portion of the vehicle body cover is located below the respective upper ends of the right front wheel and the left front wheel arranged with a narrowed space, when the front end of the vehicle body cover is disposed behind respective front ends of the right front wheel and the left front wheel arranged with the narrowed space in order to make the vehicle body cover smaller in size in relation to the front-rear direction of the vehicle body frame, the front end of the vehicle body cover comes into interference with the right front wheel and the left front wheel. Thus, the lower end of the front portion of the body cover needs to be disposed above the respective upper ends of the right front wheel and the left front wheel.

Then, it has been considered a configuration capable of reducing wind pressure that the vehicle receives, while obtaining a configuration wherein, under a condition that the vehicle is in the upright state, the front end of the vehicle body cover is disposed behind the respective front ends of the right front wheel and the left front wheel, and is disposed above the respective top ends of the right front wheel and the left front wheel arranged with a narrowed space. Specifically, it has been considered a structure comprising an aerodynamic part extending downward and rearward from the front end portion of the vehicle body cover. However, since the aerodynamic part needs to be provided so as to avoid the interference with the fright front wheel and the left front wheel, the dimensions of the aerodynamic part are limited in relation to the left-right direction and the up-down direction of the vehicle body frame. Thus, sufficient effect for the wind pressure reduction have been unable to be obtained.

In case the steering ranges of the right front wheel and the left front wheel is decreased, the movable ranges of the right front wheel and the left front wheel are accordingly decreased, whereby the dimension of the aerodynamic part can be increased. However, when the steering range for the right and left front wheels is decreased, the minimum turning radius of the vehicle decreases. That is, it has been found that, in the structure wherein the aerodynamic part is extended downward and rearward from the front end portion of the vehicle body cover with a dimension decreased in the front-rear direction of the vehicle body frame, it is impossible to obtain sufficient wind pressure reduction effect while ensuring sufficient steering range of the right front wheel and the left front wheel.

Accordingly, the vehicle body cover is divided in accordance with the functions thereof into the part (the link cover part) that essentially serves to cover at least part of the link mechanism and the part (the aerodynamic part) that serves to contribute to the wind pressure reduction. Then it has been considered suitable position and shape for each of the individual functional parts.

In the vehicle comprising the leanable vehicle body frame and the link mechanism, the right front wheel and the left front wheel each have a wide movable range. Consequently, there may be largely changed the positions and sizes of areas that are located below the link mechanism in the up-down direction of the vehicle body frame, on the left of the right front wheel in the left-right direction of the vehicle body frame and on the right of the left front wheel in the left-right direction of the vehicle body frame, in accordance with the operation of the steering mechanism. In a case where the configuration in which the part serving as the aerodynamic part is provided so as not to be able to displace relative to the vehicle body frame, the aerodynamic part needs to be provided so as to cover the whole of the areas that change so largely to whereby deflect air flow incoming to the areas. This enlarges the portion that serves as the aerodynamic parts.

The aerodynamic part that is provided on the vehicle according to the invention is provided so as to be able to displace relative to the vehicle body frame in accordance with the operation of the steering mechanism. Namely, even though the positions and sizes of areas that are located below the link mechanism in the up-down direction of the vehicle body frame, on the left of the right front wheel in the left-right direction of the vehicle body frame, and on the right of the left front wheel in the left-right direction of the vehicle body frame are changed in accordance with the operation of the steering mechanism, the aerodynamic part can be moved in accordance with such changes. Consequently, the aerodynamic part that is provided on the vehicle according to the invention can be made smaller in size even though the aerodynamic part is given the same aerodynamic function as that of the aerodynamic part that is provided so as not to be able to displace relative to the vehicle body frame irrespective of how the steering mechanism operates. With this configuration, even though the aerodynamic part is made smaller in size, it is possible to restrict increase in wind pressure that the vehicle receives.

The link cover part is provided so as not to be able to displace relative to the vehicle body frame and covers at least part of the link mechanism. In the link cover part, at least part of the function to contribute to the wind pressure reduction is divided into the aerodynamic part. Thus, the degree of freedom in design of the link cover part can be enhanced. In addition, by separating part of the functions that the link cover part has to perform, the link cover part can be formed smaller. Specifically, the link cover part has a front portion that is disposed ahead of respective rear ends of the right front wheel and the left front wheel in the front-rear direction of the vehicle body frame. The front end of the front portion is disposed behind respective front ends of the right front wheel and the left front wheel in the front-rear direction of the vehicle body frame, under the condition that the vehicle body frame is in the upright state. The lower end of the front portion is disposed above respective upper ends of the right front wheel and the left front wheel in the up-down direction of the vehicle body frame, under the condition that the vehicle body frame is in the upright state. Namely, the vehicle body cover is made smaller in size in relation to the left-right direction of the vehicle body frame by narrowing the space between the right front wheel and the left front wheel. In addition, the vehicle body cover is made smaller in size in relation to the front-rear direction of the vehicle body frame.

Thus, as has been described heretofore, according to the vehicle of the invention, the link cover part can be formed smaller in size by separating therefrom at least part of the function to contribute to the wind pressure reduction. In addition, the link cover part can also be formed smaller by providing the aerodynamic part which is able to displace relative to the vehicle body frame in accordance with the operation of the steering mechanism so as to contribute to the wind pressure reduction. Consequently, the front portion of the vehicle can be made smaller in size while maintaining the traveling performance of the vehicle comprising the leanable vehicle body frame and the two front wheels.

Referring to the accompanying drawings, the invention will be described below in detail based on a preferable embodiment.

In the accompanying drawings, an arrow F denotes a frontward direction of a vehicle. An arrow B denotes a rearward direction of the vehicle. An arrow U denotes an upward direction of the vehicle. An arrow D denotes a downward direction of the vehicle. An arrow R denotes a rightward direction of the vehicle. An arrow L denotes a leftward direction of the vehicle.

A vehicle turns by causing a vehicle body frame to lean leftward or rightward of the vehicle in relation to a vertical direction. Then, in addition to the directions based on the vehicle, directions based on the vehicle body frame are determined. In the accompanying drawings, an arrow FF denotes a frontward direction of the vehicle body frame. An arrow FB denotes a rearward direction of the vehicle body frame. An arrow FU denotes an upward direction of the vehicle body frame. An arrow FD denotes a downward direction of the vehicle body frame. An arrow FR denotes a rightward direction of the vehicle body frame. An arrow FL denotes a leftward direction of the vehicle body frame.

In this specification, a "front-rear direction of the vehicle body frame," a "left-right direction of the vehicle body frame," and an "up-down direction of the vehicle body frame" mean, respectively, a front-rear direction, a left-right direction and an up-down direction of the vehicle body frame as seen from a rider who drives the vehicle. "Sideways of the vehicle body frame" means right or left of the vehicle body frame.

In this specification, an expression "extending in the front-rear direction of the vehicle body frame" includes a fact that it extends while being inclined in relation to the front-rear direction of the vehicle body frame and means that it extends in a direction closer to the front-rear direction of the vehicle body frame than the left-right direction and up-down direction of the vehicle body frame.

In this specification, an expression "extending in the left-right direction of the vehicle body frame" includes a fact that it extends while being inclined in relation to the left-right direction of the vehicle body frame and means that it extends in a direction closer to the left-right direction of the vehicle body frame than the front-rear direction and up-down direction of the vehicle body frame.

In this specification, an expression "extending in the up-down direction of the vehicle body frame" includes a fact that it extends while being inclined in relation to the up-down direction of the vehicle body frame and means that it extends in a direction closer to the up-down direction of the vehicle body frame than the left-right direction and front-rear direction of the vehicle body frame.

In this specification, an "upright state of the vehicle body frame means a state that the vehicle is not steered at all, and a state that the up-down direction of the vehicle body frame coincides with the vertical direction. In this state, a direction based on the vehicle coincides with a direction based on the vehicle body frame. When the vehicle is turned by causing the vehicle body frame to lean leftward or rightward in relation to the vertical direction, the left-right direction of the vehicle does not coincide with the left-right direction of the vehicle body frame. In addition, the up-down direction of the vehicle does not coincide with the up-down direction of the vehicle body frame, either. However, the front-rear direction of the vehicle coincides with the front-rear direction of the vehicle body frame.

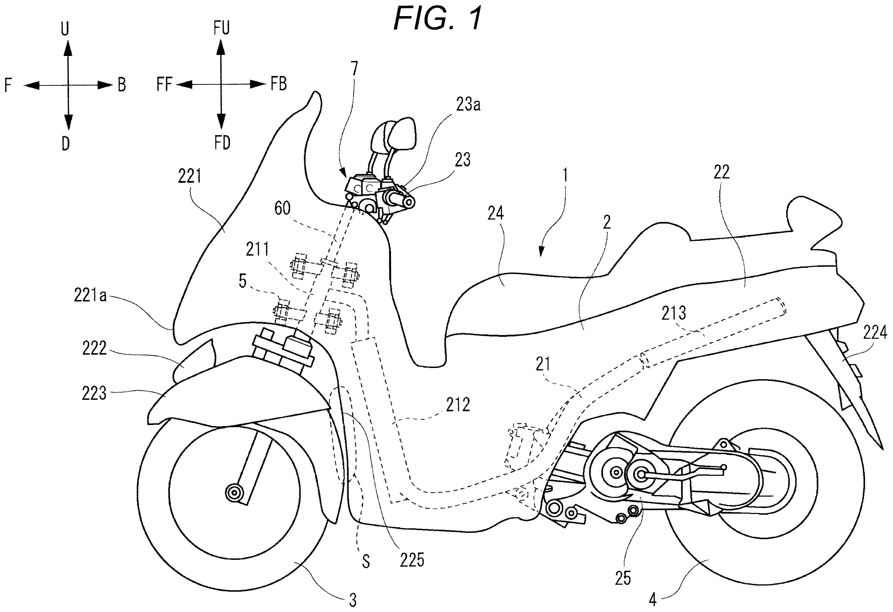

Referring to Figs. 1 to 8 and Figs. 13 to 19, a vehicle 1 according to one embodiment of the invention will be described. The vehicle 1 is a vehicle comprising a leanable vehicle body frame and two front wheels.

Fig. 1 is a left side view wherein the whole of the vehicle 1 is seen from left thereof. The vehicle 1 comprises a vehicle main body 2, a pair of left and right front wheels 3, a rear wheel 4, a link mechanism 5, and a steering mechanism 7.

The vehicle main body 2 includes a vehicle body frame 21, a vehicle body cover 22, a seat 24, and a power unit 25. In Fig. 1, the vehicle body frame 21 is in an upright state. The following description referring to Fig. 1 will be based on the premise that the vehicle body frame 21 is in the upright state.

The vehicle body frame 21 includes a head pipe 211, a down frame 212, and a rear frame 213. In Fig. 1, portions of the vehicle body frame 21 that are concealed by the vehicle body cover 22 are shown by dashed lines. The vehicle body frame 21 supports the seat 24 and the power unit 25. The power unit 25 supports the rear wheel 4. The power unit 25 comprises drive source devices such as an engine, an electric motor, a battery and the like and other devices such as a transmission and the like.

The head pipe 211 is disposed at a front portion of the vehicle 1. An upper portion of the head pipe 211 is disposed behind a lower portion of the head pipe 211 as seen from the sideways of the vehicle body frame 21.

The down frame 212 is connected to the head pipe 211. The down frame 212 is disposed directly behind the head pipe 211. The down frame 212 extends in the up-down direction of the vehicle body frame 21.

The rear frame 213 is disposed directly behind the down frame 212. The rear frame 213 extends in the front-rear direction of the vehicle body frame 21. The rear frame 213 supports the seat 24 and the power unit 25.

The vehicle body cover 22 includes a front cover 221, a front spoiler 222, a pair of front fenders 223, a rear fender 224, and a leg shield 225. The vehicle body cover 22 is a vehicle-mounted part that covers at least part of parts installed in the vehicle 1 such as the pair of left and right front wheels 3, the vehicle body frame 21, the link mechanism 5 and the like.

The front cover 221 is disposed ahead of the seat 24. The front cover 221 covers the link mechanism 5 and at least part of the steering mechanism 7. The shape and position of the front cover 221 will be described in detail later.

At least part of the front spoiler 222 is disposed directly below the front cover 221. The shape and position of the front spoiler 222 will be described in detail later.

At least portions of the pair of left and right front fenders 223 are respectively disposed directly below the front cover 221. At least portions of the pair of left and right front fenders 223 are respectively disposed directly above the pair of left and right front wheels 3. The shape and position of the pair of left and right front fenders 223 will be described in detail later.

At least part of the rear fender 224 is disposed directly above the rear wheel 4.

The leg shield 225 is disposed in a position where the leg shield 225 covers at least part of legs of a rider. The leg shield 225 is disposed behind the pair of left and right front wheels 3 and ahead of the seat 24.

At least part of the pair of left and right front wheels 3 is disposed directly below the head pipe 211. At least part of the pair of left and right front wheels 3 is disposed directly below the front cover 221.

At least part of the rear wheel 4 is disposed below the seat 24. At least part of the rear wheel 4 is disposed directly below the rear fender 224.

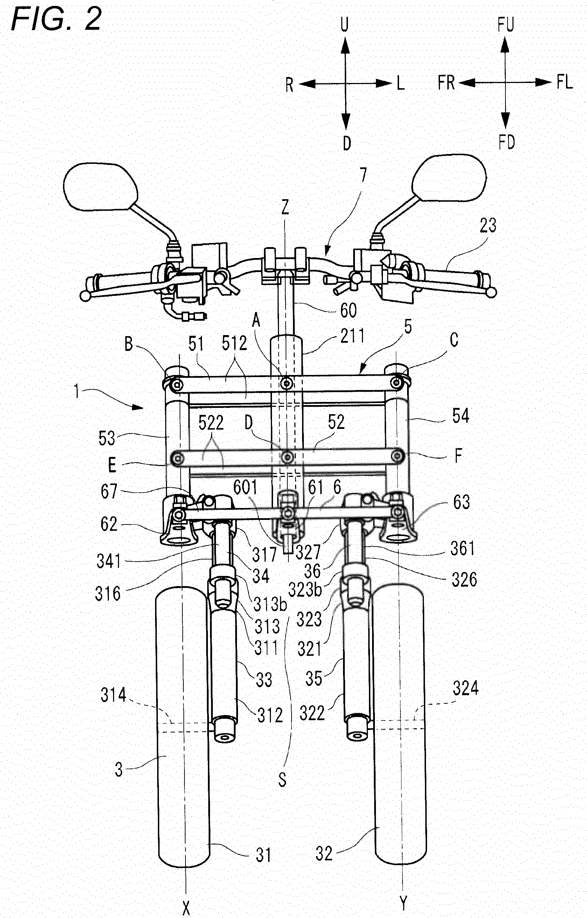

Fig. 2 is a front view wherein the front portion of the vehicle 1 is seen from front of the vehicle body frame 21. In Fig. 2, the vehicle body frame 21 is in the upright state. The following description referring to Fig. 2 will be based on the premise that the vehicle body frame 21 is in the upright state. Fig. 2 shows the front portion of the vehicle 1 under the condition that the front cover 221, the front spoiler 222, and the pair of left and right front fenders 223 are removed.

The pair of left and right front wheels 3 includes a right front wheel 31 and a left front wheel 32. The right front wheel 31 is disposed on the right of the head pipe 211 that constitutes part of the vehicle body frame 21. The left front wheel 32 is disposed on the left of the head pipe 211. The right front wheel 31 and the left front wheel 32 are disposed so as to be arranged side by side in the left-right direction of the vehicle body frame 21.

The steering mechanism 7 includes a right shock absorber 33, a left shock absorber 35, a right bracket 317, and a left bracket 327.

The right shock absorber 33 includes a right outer tube 312 (one example of a lower portion of the right shock absorber). The right outer tube 312 supports the right front wheel 31. The right outer tube 312 extends in the up-down direction of the vehicle body frame 21. The right outer tube 312 includes a right support shaft 314 at a lower end portion thereof. The right front wheel 31 is supported by the right support shaft 314 .

The right shock absorber 33 includes a right inner tube 316 (one example of an upper portion of the right shock absorber). The right inner tube 316 extends in the up-down direction of the vehicle body frame 21. The right inner tube 316 is disposed directly above the right outer tube 312 under the condition that the right inner tube 316 is partially inserted in the right outer tube 312. An upper portion of the right inner tube 316 is fixed to the right bracket 317.

The right shock absorber 33 is a so-called telescopic shock absorber. When the right inner tube 316 moves relative to the right outer tube 312 in a direction that the right outer tube 312 extends, the right shock absorber 33 can extend or contract in that direction. This enables the right shock absorber 33 to buffer a displacement of the right front wheel 31 in the up-down direction of the vehicle body frame 21 in relation to the right inner tube 316.

The left shock absorber 35 includes a left outer tube 322 (one example of a lower portion of the left shock absorber). The left outer tube 322 supports the left front wheel 32. The left outer tube 322 extends in the up-down direction of the vehicle body frame 21. The left outer tube 322 includes a left support shaft 324 at a lower end portion thereof. The left front wheel 32 is supported by the left support shaft 324 .

The left shock absorber 35 includes a left inner tube 326 (one example of an upper portion of the left shock absorber). The left inner tube 326 extends in the up-down direction of the vehicle body frame 21. The left inner tube 326 is disposed directly above the left outer tube 322 under the condition that the left inner tube 326 is partially inserted in the left outer tube 322. An upper portion of the left inner tube 326 is fixed to the left bracket 327.

The left shock absorber 35 is a so-called telescopic shock absorber. When the left inner tube 326 moves relative to the left outer tube 322 in a direction that the left outer tube 322 extends, the left shock absorber 35 can extend or contract in that direction. This enables the left shock absorber 35 to buffer a displacement of the left front wheel 32 in the up-down direction of the vehicle body frame 21 in relation to the left inner tube 326.

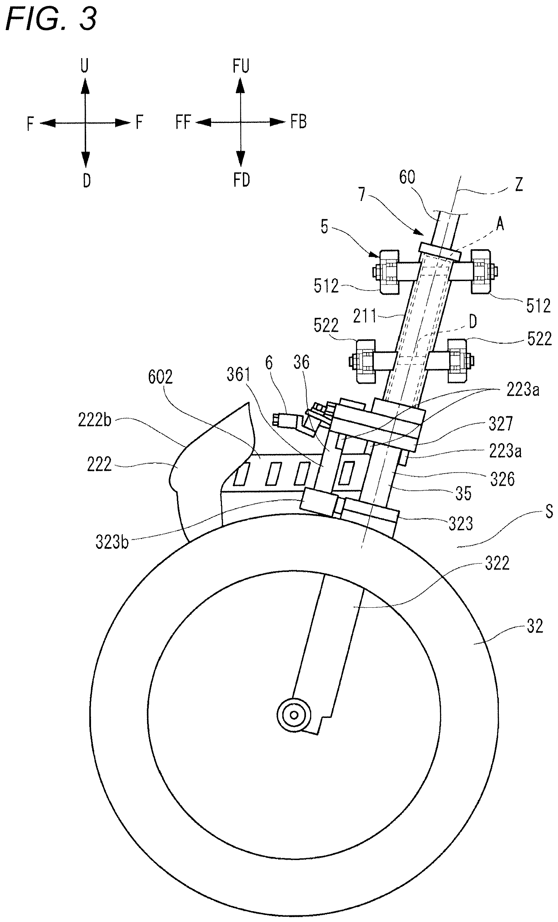

Fig. 3 is a left side view wherein the front portion of the vehicle 1 is seen from left of the vehicle body frame 21. In Fig. 3, the vehicle body frame 21 is in the upright state. The following description referring to Fig. 3 will be based on the premise that the vehicle body frame 21 is in the upright state. Fig. 3 shows the front portion of the vehicle 1 under the condition that the front cover 221 and the pair of left and right front fenders 223 are removed.

The left shock absorber 35 includes a left turn prevention mechanism 36. The left turn prevention mechanism 36 includes a left turn prevention rod 361 (one example of an upper portion of the left shock absorber), a left guide 323, and the left bracket 327. The left guide 323 is fixed to an upper portion of the left outer tube 322. The left guide 323 has a left guide tube 323b at a front portion thereof.

The left turn prevention rod 361 extends parallel to the left inner tube 326. The left turn prevention rod 361 is fixed to a front portion of the left bracket 327. The left turn prevention rod 361 is disposed directly ahead of the left inner tube 326 under the condition that the left turn prevention rod 361 is partially inserted in the left guide tube 323b. This prevents the left turn prevention rod 361 from moving relative to the left inner tube 326. When the left inner tube 326 moves relative to the left outer tube 322 in a direction that the left outer tube 322 extends, the left turn prevention rod 361 also moves relative to the left guide tube 323b. On the other hand, the left outer tube 322 is prevented from turning relative to the left inner tube 326 about an axis that extends in a direction that the left shock absorber 35 extends or contracts.

As shown in Fig. 2, the right shock absorber 33 includes a right turn prevention mechanism 34. The right turn prevention mechanism 34 includes a right turn prevention rod 341 (one example of an upper portion of the right shock absorber), a right guide 313, and the right bracket 317. The right guide 313 is fixed to an upper portion of the right outer tube 312. The right guide 313 has a right guide tube 313b at a front portion thereof.

The right turn prevention rod 341 extends parallel to the right inner tube 316. The right turn prevention rod 341 is fixed to a front portion of the right bracket 317. The right turn prevention rod 341 is disposed directly ahead of the right inner tube 316 with part thereof inserted in the right guide tube 313b. This prevents the right turn prevention rod 341 from moving relative to the right inner tube 316. When the right inner tube 316 moves relative to the right outer tube 312 in a direction that the right outer tube 312 extends, the right turn prevention rod 341 also moves relative to the right guide tube 313b. On the other hand, the right outer tube 312 is prevented from turning relative to the right inner tube 316 about an axis that extends in a direction that the right shock absorber 33 extends or contracts.

As shown in Fig. 2, the steering mechanism 7 includes a steering force transmission mechanism 6. The steering force transmission mechanism 6 includes the handlebar 23 and a steering shaft 60. The handlebar 23 is attached to an upper portion of the steering shaft 60. Part of the steering shaft 60 is turnably supported on the head pipe 211. A turning axis Z of the steering shaft 60 extends in the up-down direction of the vehicle body frame 21. As shown in Fig. 1, the upper portion of the steering shaft 60 is disposed behind a lower portion thereof. Consequently, as shown in Fig. 3, the turning axis Z of the steering shaft 60 is inclined in the front-rear direction of the vehicle body frame 21. The steering shaft 60 turns about the turning axis Z according to an operation of the handlebar 23 by the rider.

The steering force transmission mechanism 6 transmits a steering force generated in accordance with the operation of the handlebar 23 by the rider to the right bracket 317 and the left bracket 327. A specific configuration thereof will be described in detail later.

In the vehicle 1 according to this embodiment, the link mechanism 5 adopts a four parallel joint link system (also referred to as a parallelogram link).

As shown in Fig. 2, the link mechanism 5 is disposed below the handlebar 23. The link mechanism 5 is disposed above the right front wheel 31 and the left front wheel 32. The link mechanism 5 includes an upper cross member 51, a lower cross member 52, a right side member 53 and a left side member 54. The link mechanism 5 is free from the turning of the steering shaft 60 about the turning axis Z in association with the operation of the handlebar 23 and does not turn relative to the vehicle body frame 21 about the turning axis Z.

The upper cross member 51 includes a pair of plate-shaped members 512. The plate-shaped members 512 are disposed directly ahead of and behind the head pipe 211. Each of the plate-shaped members 512 extends in the left-right direction of the vehicle body frame 21.

A middle portion of the upper cross member 51 is supported on the head pipe 211 by a support portion A. The upper cross member 51 can turn relative to the head pipe 211 about a middle upper axis that passes through the support portion A and extends in the front-rear direction of the vehicle body frame 21.

A right end portion of the upper cross member 51 is supported on the right side member 53 by a support portion B. The upper support portion 51 can turn relative to the right side member 53 about a right upper axis that passes through the support portion B and extends in the front-rear direction of the vehicle body frame 21.

A left end portion of the upper cross member 51 is supported on the left side member 54 by a support portion C. The upper cross member 51 can turn relative to the left side member 54 about a left upper axis that passes through the support portion C and extends in the front-rear direction of the vehicle body frame 21.

The lower cross member 52 includes a pair of plate-shaped members 522. The plate-shaped members 522 are disposed directly ahead of and directly behind the head pipe 211. Each of the plate-shaped members 522 extends in the left-right direction of the vehicle body frame 21. The second cross member 52 is disposed below the first cross member 51. A lengthwise dimension of the lower cross member 52 in the left-right direction of the vehicle body frame 21 is the same as or similar to a lengthwise dimension of the upper cross member 51 in the left-right direction of the vehicle body frame 21. The lower cross member 52 extends parallel to the upper cross member 51.

A middle portion of the lower cross member 52 is supported on the head pipe 211 by a support portion D. The lower cross member 52 can turn about a middle lower axis that passes through the support portion D and extends in the front-rear direction of the vehicle body frame 21.

A right end portion of the lower cross member 52 is supported on the right side member 53 by a support portion E. The lower cross member 52 can turn about a right lower axis that passes through the support portion E and extends in the front-rear direction of the vehicle body frame 21.

A left end portion of the lower cross member 52 is supported on the left side member 54 by a support portion F. The lower cross member 52 can turn about a left lower axis that passes through the support portion F and extends in the front-rear direction of the vehicle body frame 21.

The middle upper axis, the middle right axis, the middle left axis, the middle lower axis, the right lower axis and the left lower axis extend parallel to each other. The middle upper axis, the middle right axis, the middle left axis, the middle lower axis, the right lower axis and the left lower axis are disposed above the right front wheel 31 and the left front wheel 32.

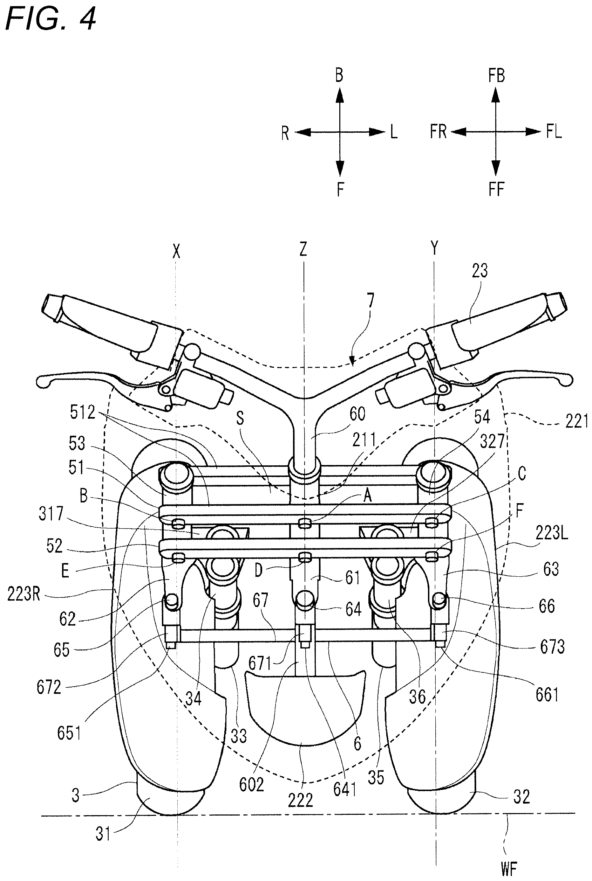

Fig. 4 is a plan view wherein the front portion of the vehicle 1 is seen from above of the vehicle body frame 21. In Fig. 4, the vehicle body frame 21 is in the upright state. The following description referring to Fig. 4 will be based on the premise that the vehicle body frame 21 is in the upright state. Fig. 4 shows a state seen through the front cover 221 indicated by dashed lines.

As shown in Figs. 2 and 4, the right side member 53 is disposed directly on the right of the head pipe 211. The right side member 53 is disposed above the right front wheel 31. The right side member 53 extends in a direction that the head pipe 211 extends. The right side member 53 extends in a direction that the turning axis Z of the steering shaft 60 extends. An upper portion of the right side member 53 is disposed behind a lower portion thereof.

The lower portion of the right side member 53 is connected to the right bracket 317. The right bracket 317 can turn relative to the right side member 53 about a right center axis X. The right center axis X extends in the direction that the right side member 53 extends. As shown in Fig. 2, the right center axis X extends parallel to the turning axis Z of the steering shaft 60 in the up-down direction of the vehicle body frame 21. As shown in Fig. 4, the right center axis X extends parallel to the turning axis Z of the steering shaft 60 in the front-rear direction of the vehicle body frame 21.

As shown in Figs. 2 and 4, the left side member 54 is disposed directly on the right of the head pipe 211. The left side member 54 is disposed above the left front wheel 32. The left side member 54 extends in the direction that the head pipe 211 extends. The left side member 54 extends in the direction that the turning axis Z of the steering shaft 60 extends. An upper portion of the left side member 54 is disposed behind a lower portion thereof.

The lower portion of the left side member 54 is connected to the left bracket 327. The left bracket 327 can turn relative to the left side member 54 about a left center axis Y. The left center axis Y extends in the direction that the right side member 53 extends. As shown in Fig. 2, the left center axis Y extends parallel to the turning axis Z of the steering shaft 60 in the up-down direction of the vehicle body frame 21. As shown in Fig. 4, the left center axis Y extends parallel to the turning axis Z of the steering shaft 60 in the front-rear direction of the vehicle body frame 21.

Thus, as has been described above, the upper cross member 51, the lower cross member 52, the right side member 53, and the left side member 54 are supported on the vehicle body frame 21 so that the upper cross member 51 and the lower cross member 52 maintain postures that are parallel to each other and the right side member 53 and the left side member 54 maintain postures that are parallel to each other.

As shown in Fig. 2, the steering force transmission mechanism 6 includes a middle transmission plate 61, a right transmission plate 62, a left transmission plate 63, a middle joint 64, a right joint 65, a left joint 66, and a tie rod 67, in addition to the handlebar 23 and the steering shaft 60.

The middle transmission plate 61 is connected to the lower portion of the steering shaft 60. The middle transmission plate 61 cannot turn relative to the steering shaft 60. The middle transmission plate 61 can turn relative to the head pipe 211 about the turning axis Z of the steering shaft 60. A front portion of the middle transmission plate 61 is tapered in the left-right direction of the vehicle body frame 21 than a rear portion thereof.

The right transmission plate 62 is disposed directly on the right of the middle transmission plate 61. The right transmission plate 62 is connected to a lower portion of the right bracket 317. The right transmission plate 62 cannot turn relative to the right bracket 317. The right transmission plate 62 can turn relative to the right side member 53 about the right center axis X. A front portion of the right transmission plate 62 is tapered in the left-right direction of the vehicle body frame 21 than a rear portion thereof.

The left transmission plate 63 is disposed directly on the left of the middle transmission plate 61. The left transmission plate 63 is connected to a lower portion of the left bracket 327. The left transmission plate 63 cannot turn relative to the left bracket 327. The left transmit 63 can turn relative to the left side member 54 about the left center axis Y. A front portion of the left transmission plate 63 is tapered in the left-right direction of the vehicle body frame 21 than a rear portion thereof.

As shown in Fig. 4, the middle joint 64 is disposed at the front portion of the middle transmission plate 61. The right joint 65 is disposed at the front portion of the right transmission plate 62. The right joint 65 is disposed directly on the right of the middle joint 64. The left joint 66 is disposed at the front portion of the left transmission plate 63. The left joint 66 is disposed directly on the left of the middle joint 64.

The tie rod 67 extends in the left-right direction of the vehicle body frame 21. The tie rod 67 comprises a middle front rod 641, a right front rod 651, and a left front rod 661.

The middle front rod 641 extends in the left-right direction of the vehicle body frame 21. The middle front rod 641 is supported on the middle transmission plate 61 via the middle joint 64. The middle front rod 641 can turn relative to the middle transmission plate 61. A turning axis of the middle front rod 641 relative to the middle transmission plate 61 extends parallel to the turning axis Z of the steering shaft 60.

The right front rod 651 is disposed directly on the right of the middle front rod 641. The right front rod 651 extends in the left-right direction of the vehicle body frame 21. The right front rod 651 extends parallel to the middle front rod 641. The right front rod 651 is supported on the right transmission plate 62 via the right joint 65. The right front rod 651 can turn relative to the right transmission plate 62. A turning axis of the right front rod 651 relative to the right transmission plate 62 extends parallel to the right center axis X.

The left front rod 661 is disposed directly on the left of the middle front rod 641. The left front rod 661 extends in the left-right direction of the vehicle body frame 21. The left front rod 661 extends parallel to the middle front rod 641. The left front rod 661 is supported on the left transmission plate 63 via the left joint 66. The left front rod 661 can turn relative to the left transmission plate 63. A turning axis of the left front rod 661 relative to the left transmission plate 63 extends parallel to the left center axis Y.

The tie rod 67 further comprises a middle ring 671, a right ring 672, and a left ring 673.

The middle ring 671 is connected to the middle front rod 641. The middle ring 671 can turn relatively about the middle front rod 641 that extends in the front-rear direction of the vehicle body frame 21.

The right ring 672 is disposed directly on the right of the middle ring 671. The right ring 672 is connected to the right front rod 651. The right ring 672 can turn relatively about the right front rod 651 that extends in the front-rear direction of the vehicle body frame 21.

The left ring 673 is disposed directly on the left of the middle ring 671. The left ring 673 is connected to the left front rod 661. The left ring 673 can turn relatively about the left front rod 661 that extends in the front-rear direction of the vehicle body frame 21.

Thus, as has been described above, the right transmission plate 62 and the left transmission plate 63 are respectively connected to the middle transmission plate 61 via the tie rod 67.

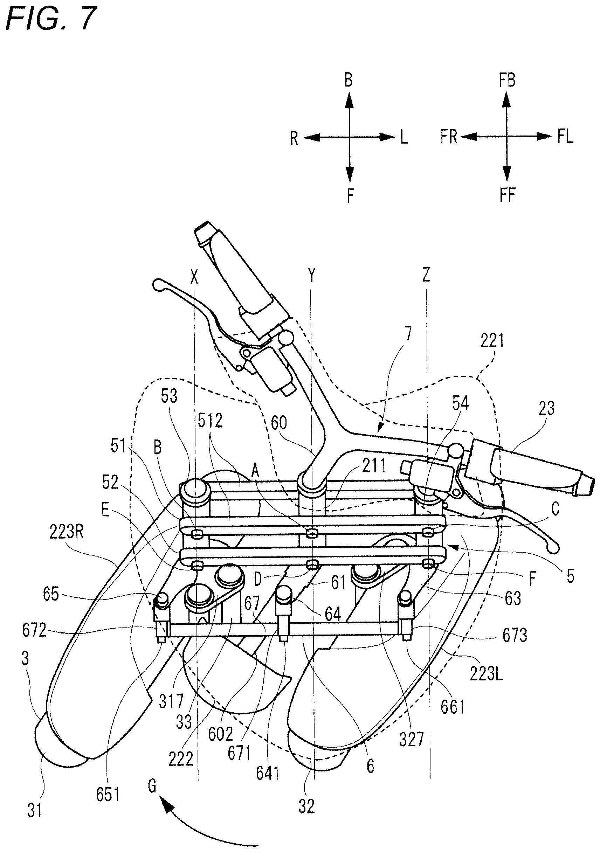

Next, referring to Figs. 4 and 7, a steering operation of the vehicle 1 will be described. Fig. 7 is a plan view wherein the front portion of the vehicle 1 is seen from above of the vehicle body frame 21, showing a state that the right front wheel 31 and the left front wheel 32 are steered rightward. Fig. 7 shows a state seen through the front cover 221 indicated by dashed lines.

When the rider operates the handlebar 23, the steering shaft 60 turns about the turning axis Z relative to the head pipe 211. In a case where the rightward steering as shown in Fig. 7, the steering shaft 60 turns in a direction indicated by an arrow G. The middle transmission plate 61 turns about the turning axis z in the direction of the arrow G relative to the head pipe 211 as the steering shaft 60 turns.

The middle front rod 641 of the tie rod 67 turns in an opposite direction to the direction indicated by the arrow G about the middle joint 64 relative to the middle transmission plate 61 as the middle transmission plate 61 turns in the direction indicated by the arrow G. This causes the tie rod 67 to move rightward and rearward while maintaining the posture of the tie rod 67.

As the tie rod 67 moves rightward and rearward, the right front rod 651 and the left front rod 661 of the tie rod 67 turn in the opposite direction to the direction indicated by the arrow G about the right joint 65 and the left joint 66, respectively. This causes the right transmission plate 62 and the left transmission plate 63 to turn in the direction indicated by the arrow G while the tie rod 67 is maintaining its posture.

When the right transmission plate 62 turns in the direction indicated by the arrow G, the right bracket 317 that is prevented from turning relative to the right transmission plate 62 turns about the right center axis X in the direction indicated by the arrow G relative to the right side member 53.

When the left transmission plate 63 turns in the direction indicated by the arrow G, the left bracket 327 that is prevented from turning relative to the left transmission plate 63 turns about the left center axis Y in the direction indicated by the arrow G relative to the left side member 54.

When the right bracket 317 turns in the direction indicated by the arrow G, the right shock absorber 33 that is connected to the right bracket 317 via the right inner tube 316 turns in the direction indicated by the arrow G about the right center axis X relative to the right side member 53. When the right shock absorber 33 turns in the direction indicated by the arrow G, the right front wheel 31 that is supported on the right shock absorber 33 via the right support shaft 314 turns in the direction indicated by the arrow G about the right center axis X relative to the right side member 53.

When the left bracket 327 turns in the direction indicated by the arrow G, the left shock absorber 35 that is connected to the left bracket 327 via the left inner tube 326 turns in the direction indicated by the arrow G about the left center axis Y relative to the left side member 54. When the left shock absorber 35 turns in the direction indicated by the arrow G, the left front wheel 32 that is supported on the left shock absorber 35 via the left support shaft 324 turns in the direction indicated by the arrow G about the left center axis Y relative to the left side member 54.

Thus, as has been described above, the steering force transmission mechanism 6 transmits a steering force to the right front wheel 31 and the left front wheel 32 in accordance with the operation of the handlebar 23 by the rider. The right front wheel 31 and the left front wheel 32 turn in a direction that corresponds to a direction that the handlebar 23 is operated by the rider about the right center axis X and the left center axis Y.

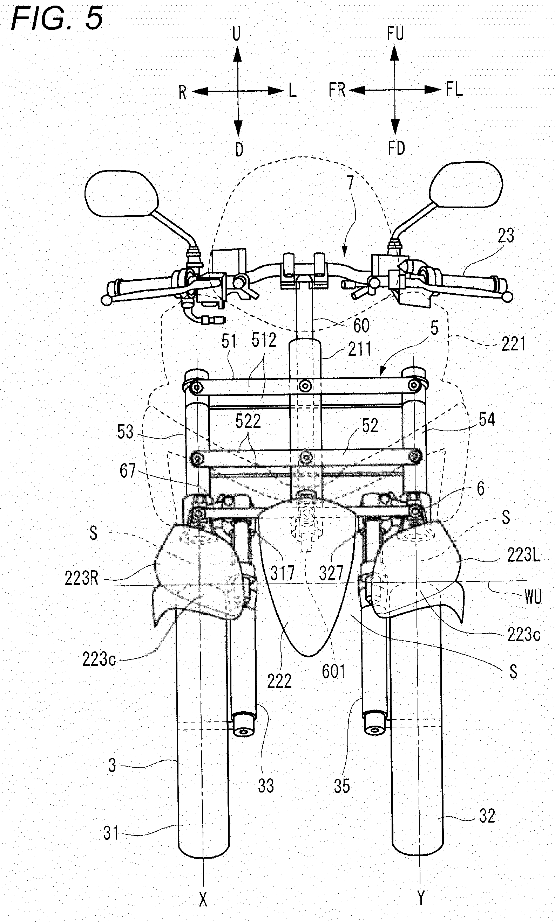

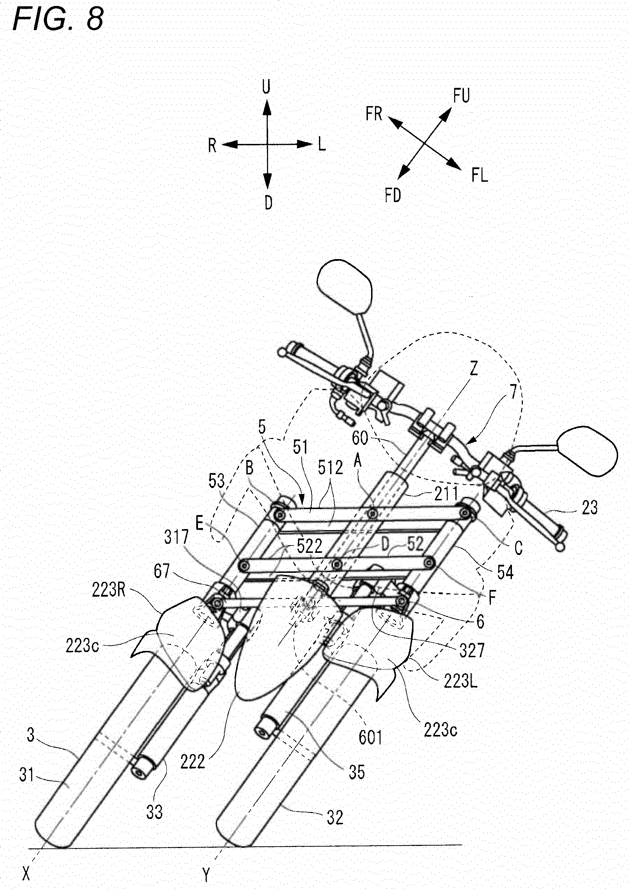

Next, referring to Figs. 5 and 8, a leaning operation of the vehicle 1 will be described. Fig. 5 is a front view wherein the front portion of the vehicle 1 is seen from front of the vehicle body frame 21. In Fig. 5, the vehicle body frame 21 is in the upright state. The following description referring to Fig. 5 will be based on the premise that the vehicle body frame 21 is in the upright state. Fig. 5 shows a state seen through the front cover 221 that is indicated by dashed lines. Fig. 8 is a front view wherein the front portion of the vehicle 1 is seen from front of the vehicle body frame 21, under a condition that the vehicle body frame 21 is caused to lean leftward. Fig. 8 shows a state seen through the front cover 221 that is indicated by dashed lines.

As shown in Fig. 5, under a condition that the vehicle body frame 21 is in the upright state, the link mechanism 5 exhibits a rectangular shape when the vehicle 1 is seen from front of the vehicle body frame 21. As shown in Fig. 8, under a condition that the vehicle body frame 21 is in the leaned state, the link mechanism 5 exhibits the shape of a parallelogram when the vehicle 1 is seen from front of the vehicle body frame 21. The deformation of the link mechanism 5 is interlocked with the leftward or rightward leaning of the vehicle body frame 21. When the link mechanism 5 is described as operating, this means that the upper cross member 51, the lower cross member 52, the right side member 53, and the left side member 54 constituting the link mechanism 5 turn relative to each other about the turning axes that pass through the corresponding support portions A to F to whereby deform the link mechanism 5.

For example, as shown in Fig. 8, when the rider causes the vehicle 1 to lean leftward, the head pipe 211 leans leftward in relation to the vertical direction. When the head pipe 211 leans, the upper cross member 51 turns rightward relative to the head pipe 211 about the middle upper axis that passes through the support portion A. Similarly, the lower cross member 52 turns rightward relative to the head pipe 211 about the middle lower axis that passes through the support portion D. This causes the upper cross member 51 to move leftward relative to the lower cross member 52.

As the upper cross member 51 moves leftward, the upper cross member 51 turns rightward relative to the right side member 53 and the left side member 54 about the right upper axis that passes through the support portion B and the left upper axis that passes through the support portion C. Similarly, the lower cross member 52 turns rightward relative to the right side member 53 and the left side member 54 about the right lower axis that passes through the support portion E and the left lower axis that passes through the support portion F. This causes the right side member 53 and the left side member 54 to lean leftward in relation to the vertical direction while maintaining their postures that are parallel to the head pipe 211.

Here, the lower cross member 52 moves leftward relative to the tie rod 67. As the lower cross member 52 moves leftward, the middle ring 671, the right ring 672 and the left ring 673 of the tie rod 67 turn rightward about the middle front rod 641, the right front rod 651, and the left front rod 661, respectively. This enables the tie rod 67 to keep the posture parallel to the upper cross member 51 and the lower cross member 52.

As the right side member 53 leans leftward, the right bracket 317 that is connected to the right side member 53 leans leftward. As the right bracket 317 leans leftward, the right shock absorber 33 that is connected to the right bracket 317 leans leftward. As the right shock absorber 33 leans leftward, the right front wheel 31 that is supported on the right shock absorber 33 leans leftward while maintaining its posture that is parallel to the head pipe 211.

As the left side member 54 leans leftward, the left bracket 327 that is connected to the left side member 54 leans leftward. As the left bracket 327 leans leftward, the left shock absorber 35 that is connected to the left bracket 327 leans leftward. As the left shock absorber 35 leans leftward, the left front wheel 32 that is supported on the left shock absorber 35 leans leftward while maintaining its posture that is parallel to the head pipe 211.

The description of the leaning operations of the right front wheel 31 and the left front wheel 32 are based on the vertical direction. However, when the vehicle 1 operates to lean (when the link mechanism 5 operates), the up-down direction of the vehicle body frame 21 does not coincide with the vertical direction. In a case where the description is made based on the up-down direction of the vehicle body frame 21, when the link mechanism 5 is in operation, the relative positions of the right front wheel 31 and the left front wheel 32 to the vehicle body frame 21 change. In other words, the link mechanism 5 changes the positions of the right front wheel 31 and the left front wheel 32 relative to the vehicle body frame 21 in the up-down direction of the vehicle body frame 21 to whereby cause the vehicle body frame 21 to lean in relation to the vertical direction.

As shown in Fig. 4, in such a state that the vehicle 1 is not turned or steered at all and that the vehicle body 21 is in the upright state, respective front ends WF of the right front wheel 31 and the left front wheel 32 coincide with each other. Although not shown in the figure, respective rear ends WB of the right front wheel 31 and the left front wheel 32 also coincide with each other. In addition, as shown in Fig. 5, in such a state that the vehicle 1 is not turned or steered at all and that the vehicle body 21 is in the upright state, respective upper ends WU of the right front wheel 31 and the left front wheel 32 coincide with each other.

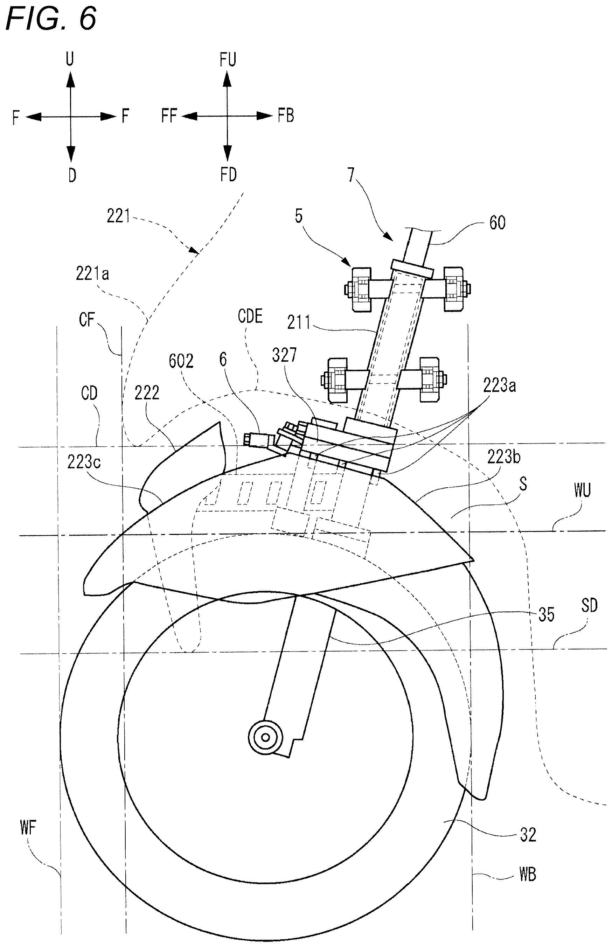

As described with reference to Fig. 1, the vehicle body cover 22 includes the front cover 221, the front spoiler 222, and the front fenders 223. Referring to Fig. 6, the positions and shapes of those constituent elements will be described. Fig. 6 is a side view wherein the front portion of the vehicle 1 is seen from left of the vehicle body frame 21. In Fig. 6, the vehicle body frame 21 is in the upright state. The following description referring to Fig. 6 will be based on the premise that the vehicle body frame 21 is in the upright state. Fig. 6 shows a state seen through the front cover 221 that is indicated by dashed lines.

The front cover 221 (one example of a link cover part) covers at least part of the link mechanism 5. The front cover 221 is provided so as not to be able to displace relative to the vehicle body frame 21. The front cover 221 has a front portion 221a. The front portion 221a is disposed ahead of the respective rear ends WB of the right front wheel 31 and the left front wheel 32 in the front-rear direction of the vehicle body frame 21. A front end CF of the front portion 221a is disposed behind the respective front ends WF of the right front wheel 31 and the left front wheel 32 in the front-rear direction of the vehicle body frame 21 under a condition that the vehicle body frame 21 is in the upright state.

The front spoiler 222 (one example of an aerodynamic part) is formed from synthetic resin or the like. The front spoiler 222 is connected to the steering shaft 60 via a stay 602. As shown in Fig. 5, a lower end portion of the steering shaft 60 projects downward than a lower end portion of the head pipe 211 to constitute a spoiler attaching portion 601. As shown in Fig. 6, the stay 602 extends in the front-rear direction of the vehicle body frame 21. A front end portion of the stay 602 is connected to the front spoiler 222, and a rear end portion of the stay 602 is connected to the spoiler attaching portion 601. A lower end SD of the front spoiler 222 is disposed below a lower edge CDE of the front portion 221a of the front cover 221 in the up-down direction of the vehicle body frame 21.

Here, the "lower edge CDE of the front portion 221a of the front cover 221" denotes a contour portion of the front portion 221a shown in Fig. 6 that extends from a portion intersecting an imaginary line denoting the front end CF to a portion intersecting an imaginary line denoting a rear end WB of the right front wheel 31 and the left front wheel 32 by way of a lower end CD.

The front spoiler 222 is provided so as to be able to displace in relation to the vehicle body frame 21 in accordance with the operation of the steering mechanism 7. As shown in Fig. 7, when the rider operates the handlebar 23, the steering shaft 60 turns about the turning axis Z relative to the head pipe 211. Accordingly, the front spoiler 222, which is connected to the steering shaft 60 by way of the spoiler attaching portion 601 and the stay 602, is turned relative to the head pipe 211 about the turning axis Z. Namely, the front spoiler 222 is displaced in the left-right direction of the vehicle body frame 21 in accordance with the operation of the steering mechanism 7.

The front spoiler 222 reduces the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state.

As shown in Fig. 5, as seen from front in the front-rear direction of the vehicle body frame 21, an area lying directly behind the space between the right front wheel 31 and the left front wheel 32 is referred to as a front-wheels rearward area S. In this embodiment, a center portion in the left-right direction of the leg shield 225 corresponds to the front-wheels rearward area S. In a case where no leg shield 225 is provided, among vehicle parts that are mounted on the down frame 212 or the periphery thereof, what is corresponding to the front-wheels rearward area S is a portion located between the right front wheel 31 and the left front wheel 32 as seen from front in the front-rear direction of the vehicle body frame 21. The front spoiler 222 reduces the wind pressure received by the front wheel rear portion S while the vehicle is running.

As shown in Fig. 8, when the rider causes the vehicle 1 to lean leftward, the head pipe 211 leans leftward in relation to the vertical direction. When the head pipe 211 leans leftward, the steering shaft 60 also leans leftward. When the steering shaft 60 leans leftward, the front spoiler 222 that is connected to the steering shaft 60 via the spoiler mounting portion 601 and the stay 602 leans leftward in relation to the vertical direction.

The front fenders 223 include a right front fender 223R and a left front fender 223L. The right front fender 223R and the left front fender 223L are made of synthetic resin or the like. As shown in Fig. 6, the left front fender 223L has a rear face 223b and a front face 223c both of which are slanted. Although not shown, the right front fender 223R also has a similar configuration.

The right front fender 223R covers at least part of an upper face of the right front wheel 31 and has a function to restrict the scattering of muddy water or the like that is raised by the right front wheel 31. The left front fender 223L covers at least part of an upper face of the left front wheel 32 and has a function to restrict the scattering of muddy water or the like that is raised by the left front wheel 32.

The left front fender 223L is supported on the left bracket 327. A plurality of stud bolts 223a are provided on the left bracket 327. A plurality of hole portions through which the stud bolts 223a can be respectively inserted are formed in the left front fender 223L. The left front fender 223L is fixed to the left bracket 327 by inserting the plurality of stud bolts 223a into the plurality of corresponding hole portions. The left front fender 223L cannot be displaced relative to the left bracket 327.

The right front fender 223R is supported on the right bracket 317. Although not shown, the right front fender 223R is fixed to the right bracket 317 with a structure similar to that for the left front fender 223L. The right front fender 223R cannot be displaced relative to the right bracket 317.

Consequently, the right front fender 223R and the left front fender 223L are provided so as to be able to displace relative to the vehicle body frame 21 in accordance with the operation of the steering mechanism 7. As shown in Fig. 7, when the rider operates the handlebar 23, via the steering force transmission mechanism 6, the right bracket 317 and the left bracket 327 are turned relative to the right side member 53 and the left side member 54 about the right center axis X and the left center axis Y, respectively. This causes the right front fender 223R and the left front fender 223L that are connected to the right bracket 317 and the left bracket 327 via the stud bolts 223a to turn about the right center axis X and the left center axis Y relative to the right side member 53 and the left side member 54. Namely, the right front fender 223R and the left front fender 223L are displaced in the left-right direction of the vehicle body frame 21 in accordance with the operation of the steering mechanism 7.

As shown in Fig. 8, when the rider causes the vehicle 1 to lean leftward, the link mechanism 5 operates. The positions of the right bracket 317 and the left bracket 327 relative to the vehicle body frame 21 are changed in the up-down direction of the vehicle body frame 21 in accordance with the operation of the link mechanism 5. Consequently, the right front fender 223R and the left front fender 223L that are fixed to the right bracket 317 and the left bracket 327, respectively, change their relative positions to the vehicle body frame 21 in the up-down direction of the vehicle body frame 21. Namely, the right front fender 223R and the left front fender 223L are provided so as to be able to displace relative to the vehicle body frame 21 in accordance with the operation of the link mechanism 5.

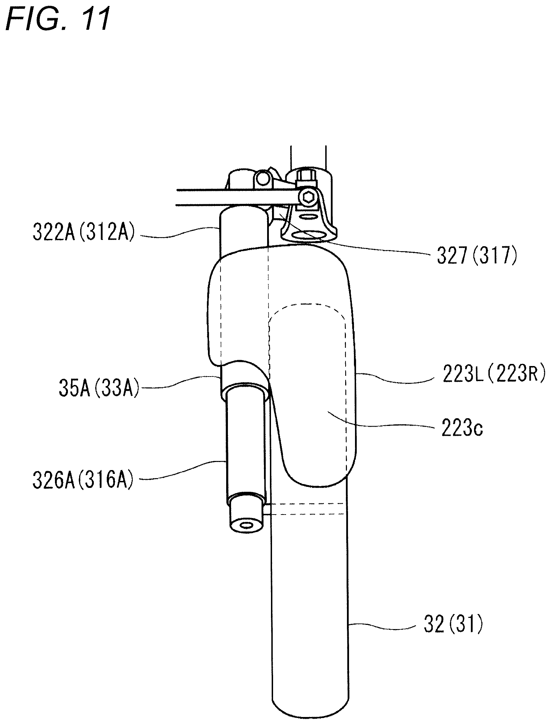

The right front fender 223R and the left front fender 223L may be fixed to others than the right bracket 317 and the left bracket 327, respectively. For example, in a modified example shown in Fig. 11, a right front fender 223R and a left front fender 223L are fixed to upper portions of left and right shock absorbers, respectively.

A left shock absorber 35A according to the modified example includes a left outer tube 322A (one example of the upper portion of the left shock absorber) and a left inner tube 326A (one example of the lower portion of the left shock absorber). An upper portion of the left outer tube 322A is fixed to the left bracket 327. The left inner tube 326A is disposed directly below the left outer tube 322A while being inserted partially in the left outer tube 322A. The left inner tube 326A supports a left front wheel 32.

The left front fender 223L according to the modified example has a portion that extends rightward in a left-right direction of a vehicle body frame 21 than the left front wheel 32, as seen from front of the vehicle 1 under a condition that the vehicle body frame 21 is in the upright state. The left front fender 223L is fixed to the left outer tube 322A.

Although not shown, a right shock absorber 33A according to the modified example has a configuration that is symmetrical with that of the left shock absorber 35A in relation to the left-right direction. Namely, a right shock absorber 33A according to the modified example includes a right outer tube 312A (one example of the upper portion of the right shock absorber) and a right inner tube 316A (one example of the lower portion of the right shock absorber). An upper portion of the right outer tube 322A is fixed to the right bracket 317. The right inner tube 316A is disposed directly below the right outer tube 312A while being inserted partially in the right outer tube 312A. The right inner tube 316A supports a right front wheel 31.

Although not shown, the right front fender 223R has a configuration that is symmetrical with that of the left front fender 223L in relation to the left-right direction. Namely, the right front fender 223R has a portion that extends leftward in the left-right direction of the vehicle body frame 21 than the right front wheel 31, as seen from front of the vehicle 1 under a condition that the vehicle body frame 21 is in the upright state. The right front fender 223R is fixed to the right outer tube 312A.

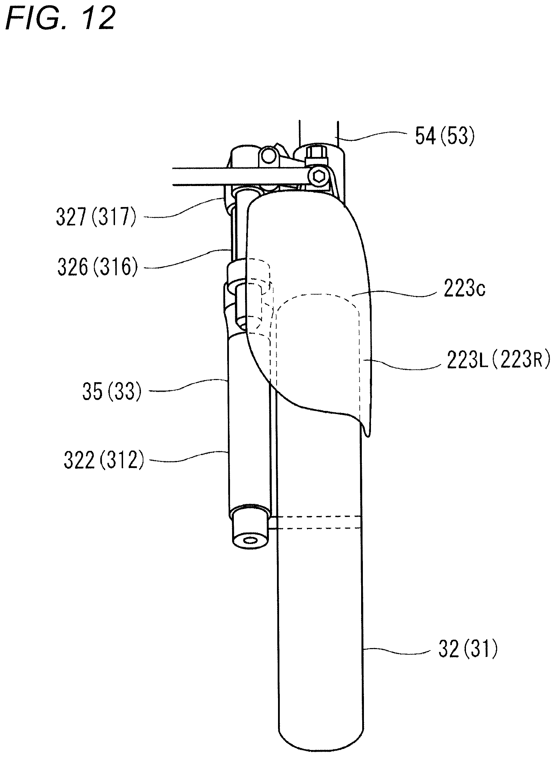

Additionally, as shown in one example shown in Fig. 12, the left front fender 223L may be formed integrally with the left bracket 327. Although not shown, the right front fender 223R according to this modified example may be formed integrally with the right bracket 317.

Thus, as has been described heretofore, the vehicle 1 according to this embodiment includes the vehicle body frame 21. The handlebar 23 is provided so as to be able to turn relative to the vehicle body frame 21. At least part of the vehicle body cover 22 covers the vehicle body frame 21. The right front wheel 31 and the left front wheel 32 are disposed so as to be arranged side by side in the left-right direction of the vehicle body frame 21. The steering mechanism 7 transmits turning of the handlebar 23 to the right front wheel 31 and the left front wheel 32. The link mechanism 5 is disposed above the right front wheel 31 and the left front wheel 32. The link mechanism 5 changes the respective positions of the right front wheel 31 and the left front wheel 32 relative to the vehicle body frame 21, thereby causing the vehicle body frame 21 to lean relative to the vertical direction. The power unit 25 is supported by the vehicle body frame 21. The body cover 22 includes the front cover 221 (one example of the link cover part) and the front spoiler 222 (one example of the aerodynamic part).

The front cover 221 covers at least part of the link mechanism 5. The front cover 221 is provided so as not to be able to displace relative to the vehicle body frame 21. The front cover 221 has the front portion 221a that is disposed ahead of the respective rear ends WB of the right front wheel 31 and the left front wheel 32 in the front-rear direction of the vehicle body frame 21. A front end CF of the front portion 221a is disposed behind the respective front ends WF of the right front wheel 31 and the left front wheel 32 in the front-rear direction of the vehicle body frame 21 under a condition that the vehicle body frame 21 is in the upright state.

The front spoiler 222 reduces the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. The front spoiler 222 is provided so as to be able to displace relative to the body frame 21 in accordance with the operation of the steering mechanism 7. The lower end of the front spoiler 222 is disposed below the lower edge CDE of the front portion 221a of the front cover 221 in the up-down direction of the vehicle body frame 21.

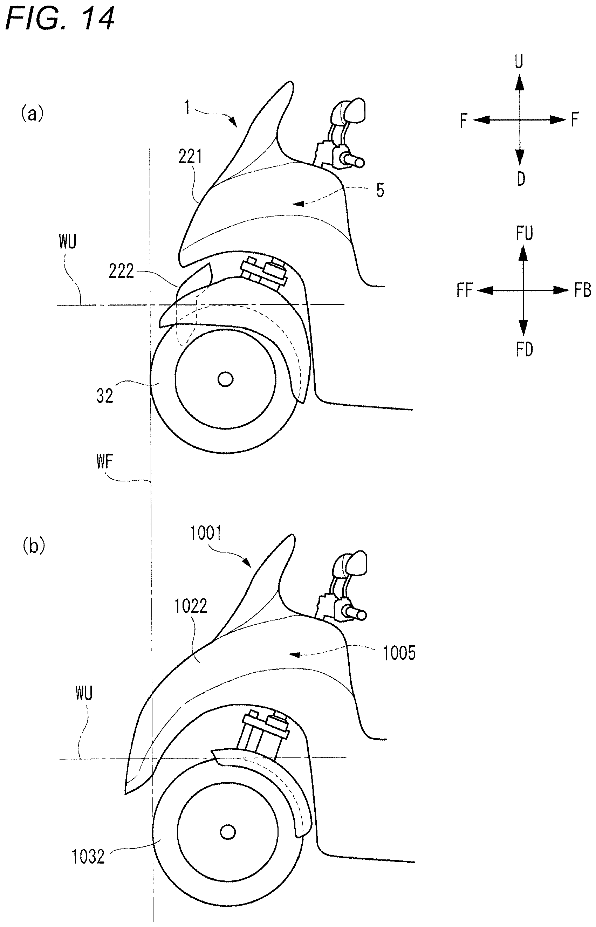

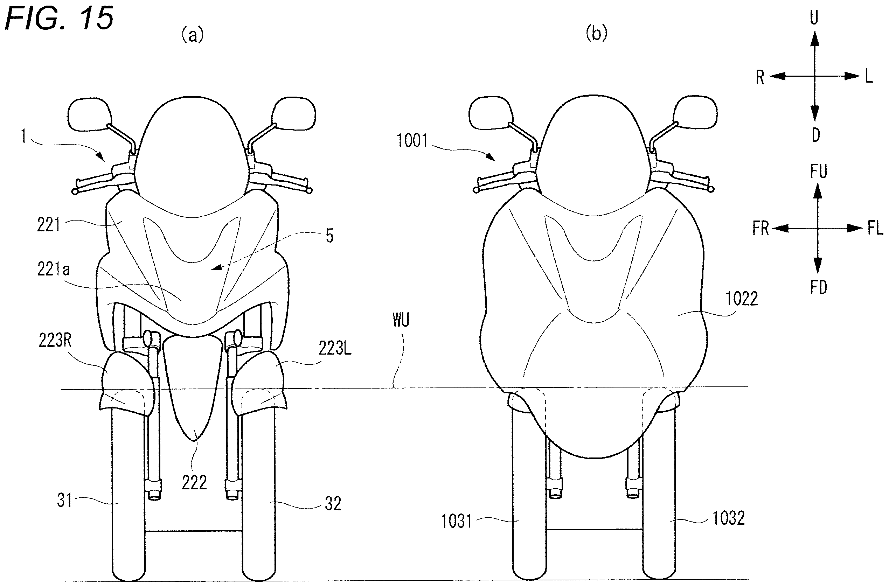

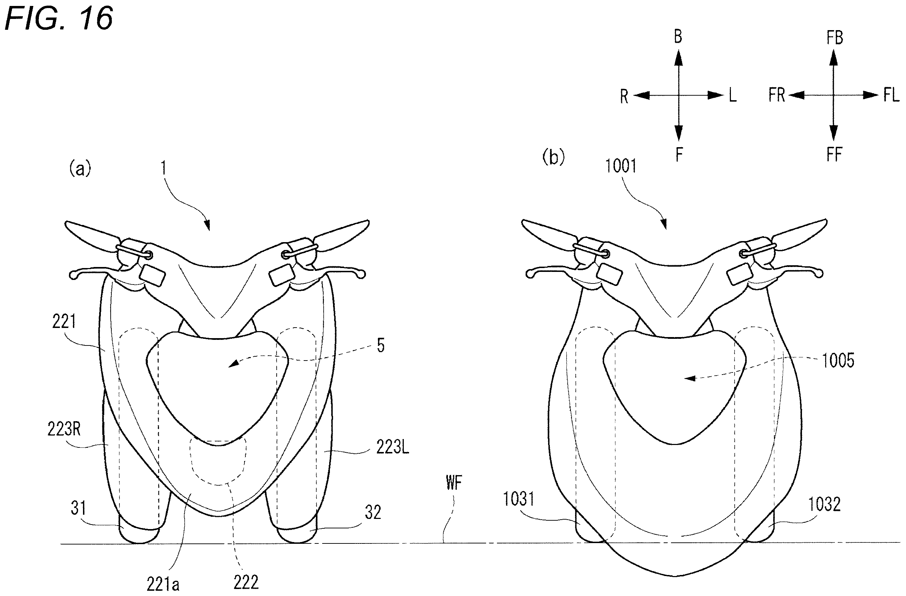

Referring to schematic drawings of Figs. 14 to 17, there will be described the functions and advantageous effects of the front spoiler 222 configured as described above. (a) in Fig. 14 is a side view wherein the front portion of the vehicle 1 according to the embodiment is seen from the sideways of the vehicle body frame 21. (b) in Fig. 14 is a side view wherein the front portion of a vehicle 1001 according to a comparison example is seen from the same direction. (a) in Fig. 15 is a front view wherein the front portion of the vehicle 1 according to the embodiment is seen from front of the vehicle body frame 21. (b) in Fig. 15 is a front view wherein the front portion of the vehicle 1001 according to the comparison example is seen from the same direction. (a) in Fig. 16 is a plan view wherein the front portion of the vehicle 1 according to the embodiment is seen from above of the vehicle body frame 21. (b) in Fig. 16 is a plan view wherein the front portion of the vehicle 1001 according to the comparison example is seen from the same direction. In any one of those drawings, the vehicle body frame is in the upright state.

In order to find out a cause that traveling performance is degraded, wind pressure received by the vehicle during traveling was analyzed for each of the vehicle body covers having various shapes. As a result, as shown at (b) in Fig. 14, (b) in Fig. 15 and (b) in Fig. 16, it has been found that the part of the vehicle body cover 1022 extending downward than the respective front ends WF of the right front wheel 1031 and the left front wheel 1032 arranged with a narrowed space reduces the wind pressure received, during the traveling of the vehicle 1001, by at least one of the part of the body frame, the part of the body cover, and the part of the power unit, any one of which is located below the link mechanism 1005 in the up-down direction of the vehicle body frame, on the left of the right front wheel 1031 in the left-right direction of the vehicle body frame, and on the right of the left front wheel 1032 in the left-right direction of the vehicle body frame, as seen from front of the vehicle 1001 in the front-rear direction of the vehicle body frame under the condition that the vehicle body frame is in the upright state, and is located behind the right front wheel 1031 and the left front wheel 1032 in the front-rear direction of the vehicle body frame, as seen from the sideways of the vehicle body frame of the vehicle 1001 under the condition that the vehicle body frame is in the upright state. Additionally, it has also been found that the wind pressure increases air resistance generated by air flow passing through an area located on the left of the right front wheel 1031 in the left-right direction of the vehicle body frame, and an area located on the right of the left front wheel 1032 in the left-right direction of the vehicle body frame. Further, it has been found that the traveling performance of the vehicle can be maintained by reducing the wind pressure to whereby reduce air resistance. In addition, it has been found that the vehicle body cover 1022 not only serves to cover at least part of the link mechanism but also serves to reduce wind pressure. Accordingly, the vehicle body cover is divided in accordance with the functions thereof into the part (the link cover part) that essentially serves to cover at least part of the link mechanism and the part (the aerodynamic part) that serves to contribute to the wind pressure reduction. Then it has been considered suitable position and shape for each of the individual functional parts.

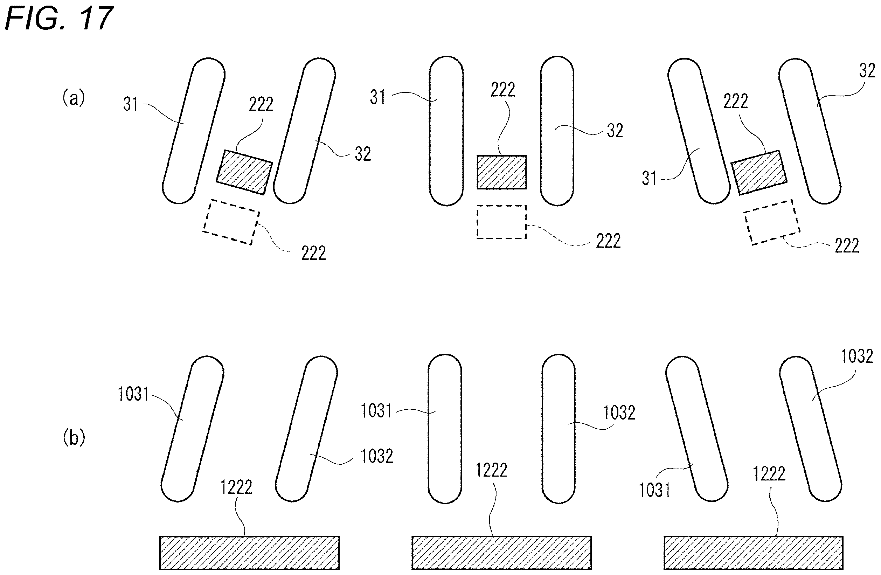

In the vehicle comprising the leanable vehicle body frame and the link mechanism, the right front wheel and the left front wheel each have a wide movable range. Consequently, there may be largely changed the positions and sizes of areas that are located below the link mechanism in the up-down direction of the vehicle body frame than the link mechanism, on the left of the right front wheel in the left-right direction of the vehicle body frame, and on the right of the left front wheel in the left-right direction of the vehicle body frame, in accordance with the operation of the steering mechanism. In a case where the configuration in which the portion of the vehicle body cover 1022 that serves as the aerodynamic part 1222 is provided so as not to be able to displace relative to the vehicle body frame, as in the vehicle 1001 according to the comparison example shown at (b) in Fig. 17, the aerodynamic part 1222 needs to be provided so as to cover the whole of the area to change the direction of air flowing toward the area. This enlarges the vehicle body cover 1022.

The front spoiler 222 (one example of the aerodynamic part) is provided on the vehicle 1 according to this embodiment so as to be able to displace in relation to the vehicle body frame 21 in accordance with the operation of the steering mechanism 7. Namely, even though the positions and sizes of areas that are located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21 are changed in accordance with the operation of the steering mechanism 7, the front spoiler 222 can be moved in accordance with such changes. Consequently, as shown at (a) in Fig. 17, the front spoiler 222 provided on the vehicle according to this embodiment can be made smaller in size even if the front spoiler 222 has the function to reduce the wind pressure as equally as the body cover 1022 of the vehicle 1001 according to the comparison example. With this configuration, even though the front spoiler 222 is made smaller in size, it is possible to restrict increase in wind pressure that the vehicle receives. In addition, since the front spoiler 222 can be made smaller in size, as indicated by dashed lines at (a) in Fig. 17, the degree of freedom in selecting the position of the front spoiler 222 so as to obtain a desired function for the wind pressure reduction.

On the other hand, the front cover 221, which is one example of a link cover part is provided so as not to be able to displace relative to the vehicle body frame 21 and covers at least part of the link mechanism 5. In the front cover 221, at least part of the function to contribute to the wind pressure reduction is divided into the front spoiler 222. Thus, the degree of freedom in design of the front cover 221 can be enhanced. In addition, by separating part of the functions that the front cover 221 has to perform, the link cover part can be formed smaller. Specifically, as explained with reference to Fig. 6, the front cover 221 has the front portion 221a that is disposed ahead of the respective rear ends WB of the right front wheel 31 and the left front wheel 32 in the front-rear direction of the vehicle body frame 21. A front end CF of the front portion 221a is disposed behind the respective front ends WF of the right front wheel 31 and the left front wheel 32 in the front-rear direction of the vehicle body frame 21 under a condition that the vehicle body frame 21 is in the upright state. Namely, the vehicle body cover is made smaller in size in relation to the left-right direction of the vehicle body frame 21 by narrowing the space between the right front wheel 31 and the left front wheel 32. In addition, the vehicle body cover 22 is made smaller in size in relation to the front-rear direction of the vehicle body frame 21. This fact becomes obvious from the comparison with the vehicle 1001 according to the comparison example shown in Figs. 14 to 16.

As described the above, the front spoiler 222 provided on the vehicle 1 according to this embodiment reduces the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. In addition, it is possible to reduce air resistance in the front-wheels rearward area S.

Consequently, the front portion of the vehicle 1 can be made smaller in size while maintaining the traveling performance of the vehicle 1 comprising the leanable vehicle body frame 21 and the two front wheels 3.

The expressions "divide" and "separate" used in the above explanations are not intended to exclusively mean a case where the function to cover at least part of the link mechanism 5 is completely divided or separated from the function to contribute to the wind pressure reduction. It is not excluded a case where the front cover 221 has the function to contribute to the wind pressure reduction. It is not excluded a case where the front spoiler 222 has the function to cover at least part of the link mechanism 5.

The position of the front spoiler 222 may be arbitrarily determined as long as it is possible to reduce the wind pressure received, during the traveling of the vehicle, by at least one of part of the vehicle body frame 21, part of the vehicle body cover 22 and part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21 than the left front wheel 32, as seen from front of the vehicle 1 in the front-rear direction of the vehicle body frame 21 under the condition that the vehicle body frame 21 is in the upright state, and located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state, as has been explained with reference to (a) of Fig. 17.

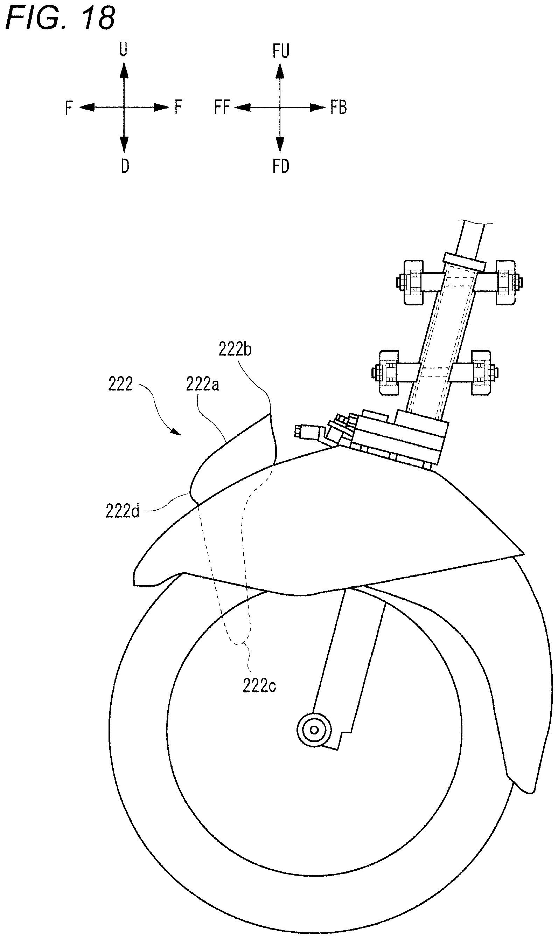

In this embodiment, as shown in Fig. 18, as seen from the sideways of the vehicle body frame 21 of the vehicle 1 under the condition that the vehicle body frame 21 is in the upright state, the front edge 222a of the front spoiler 222 is slanted so that at least either of an upper end 222b and a lower end 222c is located behind a front end 222d.

Here, the "front edge 222a of the front spoiler 222" denotes a contour portion that extends from the upper end 222b to the lower end 222c. In Fig. 18, the contour portion appears directly ahead of the vehicle body frame 21 in the front-rear direction of the vehicle body frame 21.

According to this configuration, it is changed, in the up-down direction of the vehicle body frame 21 along the slanted portion of the front spoiler 222, the direction of air flowing toward at least one of part of the vehicle body frame 21, part of the vehicle body cover 22 and part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. Accordingly, it is possible to further reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. In addition, it is possible to directly reduce air resistance in the front-wheels rearward area S. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

The front edge 222a of the front spoiler does not have to be slanted so that both the upper end 222b and the lower end 222c are located behind the front end 222d. The front edge 222a of the front spoiler 222 may be slanted so that at least either of the upper end 222b and the lower end 222c is located behind the front end 222d as long as the incoming objects can be deflected in the up-down direction of the vehicle body frame 21.

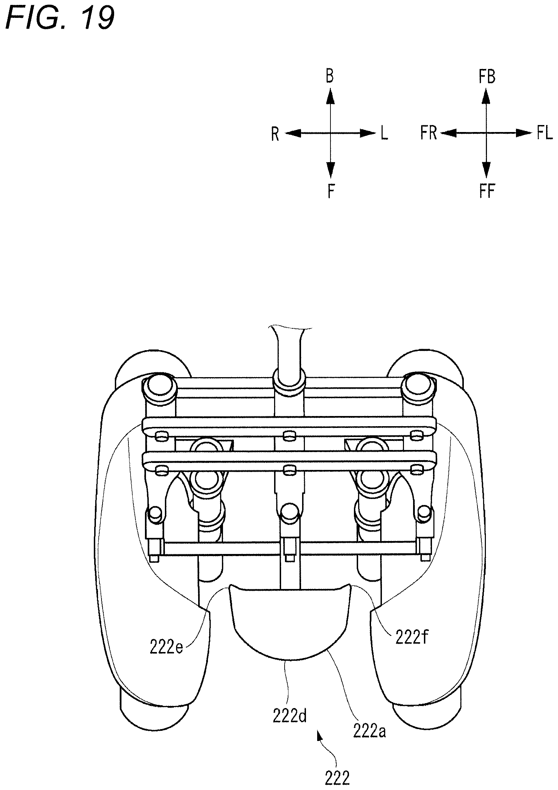

In this embodiment, as shown in Fig. 19, as seen from above of the vehicle body frame 21 of the vehicle 1 under the condition that the vehicle body frame 21 is in the upright state, the front edge 222a of the front spoiler 222 is slanted so that at least either of a right end 222e and a left end 222f is located behind a front end 222d.

Here, the "front edge 222a of the front spoiler 222" denotes a contour portion that extends from the right end 222e to the left end 222f. In Fig. 19, the contour portion appears directly ahead of the vehicle body frame 21 in the front-rear direction of the vehicle body frame 21.

According to this configuration, it is changed, in the left-right direction of the vehicle body frame 21 along the slanted portion of the front spoiler 222, the direction of air flowing toward at least one of part of the vehicle body frame 21, part of the vehicle body cover 22 and part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. Accordingly, it is possible to further reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. It is also possible to directly reduce air resistance in the front-wheels rearward area S. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

The front edge 222a of the front spoiler does not have to be slanted so that both the right end 222e and the left end 222f are located behind the front end 222d. The front edge 222a of the front spoiler 222 may be slanted so that at least either of the right end 222e and the left end 222f is located behind the front end 222d as long as the incoming objects can be deflected in the left-right direction of the vehicle body frame 21.

In the embodiment, as shown in Fig. 6, the lower end CD of the front portion 221a of the front cover 221 is disposed above the respective upper ends WU of the right front wheel 31 and the left front wheel 32 in the up-down direction of the vehicle body frame 21, under the condition that the vehicle body frame 21 is in the upright state.

According to this arrangement, the degree of contribution of the front cover 221 to the function for the wind pressure reduction can be decreased since the lower end CD of the front portion 221a of the front cover 221 is disposed above respective upper ends WU of the right front wheel 31 and the left front wheel 32 in the up-down direction of the vehicle body frame 21, under the condition that the vehicle body frame 21 is in the upright state. Accordingly, it is possible to decrease the size of the front portion of the vehicle 1 while maintaining traveling performance of the vehicle 1 comprising the leanable vehicle body frame 21 and the two front wheels 3.

In the embodiment, as shown in Fig. 6, the lower end SD of the front spoiler 222 is disposed below the respective upper ends WU of the right front wheel 31 and the left front wheel 32 in the up-down direction of the vehicle body frame 21, under the condition that the vehicle body frame 21 is in the upright state.

According to this arrangement, even though the lower end SD of the front spoiler 222 is disposed below the respective upper ends WU of the right front wheel 31 and the left front wheel 32, it is easy to avoid the interference with the right front wheel 31 and the left front wheel 32 since the front spoiler 222 is provided so as to be able to displace relative to the vehicle body frame 21 in accordance with the operation of the steering mechanism 7. Consequently, the enlargement of the front spoiler 222 is restricted. Accordingly, it is possible to decrease the size of the front portion of the vehicle 1 while maintaining traveling performance of the vehicle 1 comprising the leanable vehicle body frame 21 and the two front wheels 3.

In the embodiment, as shown in Fig. 6, at least part of the front spoiler 222 is disposed behind the respective front ends WF of the right front wheel 31 and the left front wheel 32 in the front-rear direction of the vehicle body frame 21 under the condition that the vehicle body frame 21 is in the upright state.

According to this arrangement, it is possible to further reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the two front wheels 3 and the vehicle body frame 21 are in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. It is also possible to directly reduce air resistance in the front-wheels rearward area S. Additionally, the right and left front wheels 31, 32 and the front spoiler 222 are allowed to be made closer to each other while avoiding the interference of the front spoiler 222 with the right and left front wheels 31, 32 that are being displaced. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

Particularly in the embodiment, as shown in Fig. 6, at least part of the front spoiler 222 is disposed ahead of the steering shaft 60 in the front-rear direction of the vehicle body frame 21 under the condition that the vehicle body frame 21 is in the upright state.

According to this arrangement, it is easy to dispose the front spoiler 222 so as to be spaced apart from at least one of part of the vehicle body frame 21, part of the vehicle body cover 22 and part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the two front wheels 3 and the vehicle body frame 21 are in the upright state, and located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. Consequently, the degree of freedom in designing the front spoiler 222 is increased, whereby the wind pressure received by the portion of the vehicle 1 that lies behind the steering shaft 60 becomes easy to be restricted. Accordingly, it is possible to decrease the size of the front portion of the vehicle 1 while maintaining traveling performance of the vehicle 1 comprising the leanable vehicle body frame 21 and the two front wheels 3.

In this embodiment, as shown in Fig. 5, at least part of the front spoiler 222 is disposed below the link mechanism 5 in the up-down direction of the vehicle body frame 21, and disposed between the right front wheel 31 and the left front wheel 32 as seen from front of the vehicle 1 in the front-rear direction of the vehicle body frame 21 under the condition that the vehicle body frame 21 is in the upright state.

According to this arrangement, it is possible to directly reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. It is also possible to directly reduce air resistance in the front-wheels rearward area S. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

In this embodiment, as shown in Fig. 5, at least part of the front spoiler 222 is disposed at center in the left-right direction of the vehicle body frame 21 as seen from front of the vehicle body frame 21 being in the upright state. When referred to herein, the "center in the left-right direction" means a position that is superposed on the turning axis Z of the steering shaft 60 as seen from front of the vehicle body frame 21 being in the upright state.

According to this arrangement, it is possible to directly reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. It is also possible to directly reduce air resistance in the front-wheels rearward area S. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

In this embodiment, as shown in Fig. 5, at least part of the front spoiler 222 is disposed between the right shock absorber 33 and the left shock absorber 35 as seen from front of the vehicle body frame 21 being in the upright state.

According to this arrangement, even when the right front wheel 31 and the left front wheel 32 are displaced in accordance with the operation of the right shock absorber 33 and the left shock absorber 35, it is possible to directly reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. It is also possible to directly reduce air resistance in the front-wheels rearward area S. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

In this embodiment, as shown in Fig. 5, the front spoiler 222 has a dimension in the up-down direction of the vehicle body frame 21 larger than a dimension in the left-right direction of the vehicle body frame 21, as seen from front of the vehicle 1 in the front-rear direction of the vehicle body frame 21 under the condition that the vehicle body frame 21 is in the upright state.

According to this configuration, it is easy to narrow the space between the right front wheel 31 and the left front wheel 32, whereby the body cover 22 can be made smaller in size in relation to the left-right direction of the vehicle body frame 21. Additionally, it is possible to further reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. It is also possible to directly reduce air resistance in the front-wheels rearward area S. Therefore, the front spoiler 222 having the function to contribute to the wind pressure reduction can be formed further smaller in size. Accordingly, it is possible to decrease the size of the front portion of the vehicle 1 while maintaining traveling performance of the vehicle 1 comprising the leanable vehicle body frame 21 and the two front wheels 3.

In this embodiment, as has been explained with reference to Figs. 5 and 6, the front spoiler 222 is fixed to the steering shaft 60.

According to the configuration described above, since the front spoiler 222 is directly moved in accordance with the operation of the steering mechanism 7, the front spoiler 222 is easy to be made smaller in size. Accordingly, it is possible to decrease the size of the front portion of the vehicle 1 while maintaining traveling performance of the vehicle 1 comprising the leanable vehicle body frame 21 and the two front wheels 3.

The part serving as the aerodynamic part may be fixed to other part than the steering shaft 60 as long as it is possible to reduce the wind pressure received, during the traveling of the vehicle, by at least one of part of the vehicle body frame 21, part of the vehicle body cover 22 and part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and located behind the right front wheel 31 and the left front wheel 32 in the front-rear direction of the vehicle body frame, as seen from the sideways of the vehicle body frame 21 of the vehicle 1 under the condition that the vehicle body frame 21 is in the upright state. For example, the protecting part may be fixed to any one of the right shock absorber 33 and the left shock absorber 35, the right bracket 317 and the left bracket 327, and the steering force transfer mechanism 6. Here, the steering force transmission mechanism 6 includes the middle transmission plate 61, the right transmission plate 62, the left transmission plate 63, the middle joint 64, the right joint 65, the left joint 66, and the tie rod 67.

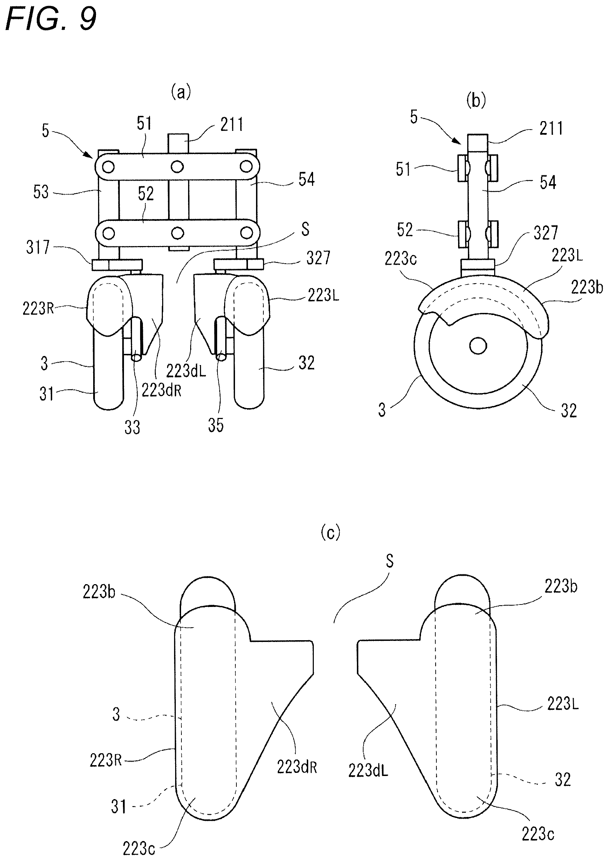

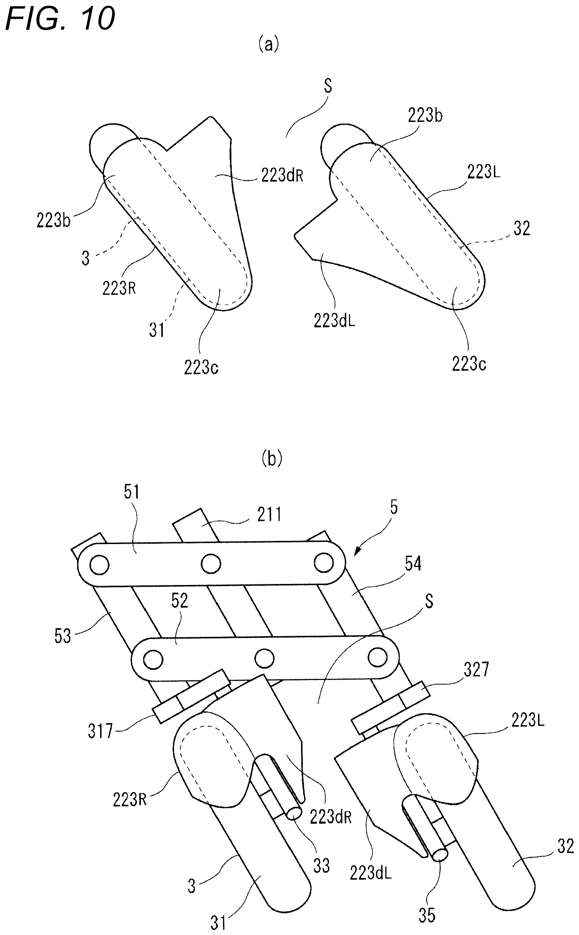

Referring to Figs. 9 and 10, a modified example will be described in which the portion that functions as the aerodynamic part is fixed to the right bracket 317 and the left bracket 327. Figs. 9 and 10 schematically show part of the configuration of this modified example. (a) in Fig. 9 is a front view wherein the configuration is seen from front in a front-rear direction of the vehicle body frame 21. (b) in Fig. 9 is a left side view wherein the configuration is seen from left in a left-right direction of the vehicle body frame 21. (c) in Fig. 9 is a plan view wherein a right front fender 223R and a left front fender 223L according this modified example are seen from above thereof in an up-down direction of the vehicle body frame 21.

The right front fender 223R according to the modified example has a right projecting portion 223dR that extends leftward in the left-right direction of the vehicle body frame 21 than the right front wheel 31, as seen from front of the vehicle 1 under a condition that the vehicle body frame 21 is in the upright state.

The left front fender 223L according to the modified example has a left projecting portion 223dL that extends rightward in the left-right direction of a vehicle body frame 21 than the left front wheel 32, as seen from front of the vehicle 1 under a condition that the vehicle body frame 21 is in the upright state.

The right projecting portion 223dR and the left projecting portion 223dL are provided so as to be able to displace in relation to the vehicle body frame 21 in accordance with the operation of the steering mechanism 7. As shown in Fig. 7, when the rider operates the handlebar 23, via the steering force transmission mechanism 6, the right bracket 317 and the left bracket 327 are turned relative to the right side member 53 and the left side member 54 about the right center axis X and the left center axis Y, respectively. This causes the right front fender 223R and the left front fender 223L that are connected to the right bracket 317 and the left bracket 327 via the stud bolts 223a to turn about the right center axis X and the left center axis Y relative to the right side member 53 and the left side member 54. Accordingly, the right projecting portion 223dR and the left projecting portion 223dL are displaced in the left-right direction of the vehicle body frame 21 in accordance with the operation of the steering mechanism 7.

As shown in Fig. 8, when the rider causes the vehicle 1 to lean leftward, the link mechanism 5 operates. The positions of the right bracket 317 and the left bracket 327 relative to the vehicle body frame 21 are changed in the up-down direction of the vehicle body frame 21 in accordance with the operation of the link mechanism 5. Consequently, the right front fender 223R and the left front fender 223L that are fixed to the right bracket 317 and the left bracket 327, respectively, change their relative positions to the vehicle body frame 21 in the up-down direction of the vehicle body frame 21. Therefore, the right projecting portion 223dR and the left projecting portion 223dL are provided so as to be able to displace in relation to the vehicle body frame 21 in accordance with the operation of the link mechanism 5.

The right projecting portion 223dR and the left projecting portion 223dL are disposed and shaped so that the right projecting portion 223dR and the left projecting portion 223dL are prevented from interfering with each other even though the right projecting portion 223dR and the left projecting portion 223dL are displaced relative to the vehicle body frame 21 according to the steering operation and the leaning operation that are described above.

As shown at (a) in Fig. 9, the right projecting portion 223dR and the left projecting portion 223dL are disposed below the link mechanism 5 in the up-down direction of the vehicle body frame 21, and disposed between the right front wheel 31 and the left front wheel 32 as seen from front of the vehicle 1 in the front-rear direction of the vehicle body frame 21 under the condition that the vehicle body frame 21 is in the upright state. The right projecting portion 223dR and the left projecting portion 223dL according to this modified example serve as aerodynamic parts. Namely, the right projecting portion 223dR and the left projecting portion 223dL reduce the wind pressure received, during the traveling of the vehicle, by at least one of part of the vehicle body frame 21, part of the vehicle body cover 22 and part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame is in the upright state, and located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. Additionally, the right projecting portion 223dR and the left projecting portion 223dL reduce the wind pressure received by the front-wheels rearward area S during the traveling of the vehicle. In this case, the front spoiler 222 may not be provided.

The right projecting portion 223dR and the left projecting portion 223dL may be provided on the right front fender 223R and the left front fender 223L according to the modified example that was described with reference to Fig. 11. In this case, the right projecting portion 223dR is fixed to a right outer tube 312A (one example of the upper portion of the right shock absorber) of a right shock absorber 33A. In addition, the left projecting portion 223dL is fixed to a left outer tube 322A (one example of the upper portion of the left shock absorber) of a left shock absorber 35A.

According to the configuration described above, even though the right front wheel 31 and the left front wheel 32 are displaced in the up-down direction of the vehicle body frame 21 in accordance with the operation of the right shock absorber 33A and the left shock absorber 35A, the right projecting portion 223dR and the left projecting portion 223dL are prevented from being displaced in the same direction in association with the displacement of the right front wheel 31 and the left front wheel 32 in the up-down direction of the vehicle body frame 21. Accordingly, it is possible to further reduce the wind pressure received, during the traveling of the vehicle 1, by at least one of the part of the body frame 21, the part of the body cover 22, and the part of the power unit 25, any one of which is located below the link mechanism 5 in the up-down direction of the vehicle body frame 21, on the left of the right front wheel 31 in the left-right direction of the vehicle body frame 21, and on the right of the left front wheel 32 in the left-right direction of the vehicle body frame 21, as seen from front of the vehicle 1 in the front-rear direction of the vehicle body frame 21 under the condition that the vehicle body frame 21 is in the upright state, and is located behind the right front wheel 31 and the left front wheel 32 in the front-rear direction of the vehicle body frame 21, as seen from the sideways of the vehicle body frame 21 of the vehicle 1 under the condition that the vehicle body frame 21 is in the upright state. Accordingly, the right projecting portion 223dR and the left projecting portion 223dL having the function to contribute to the wind pressure reduction can be formed further smaller in size. Therefore, it is possible to decrease the size of the front portion of the vehicle 1 while maintaining traveling performance of the vehicle 1 comprising the leanable vehicle body frame 21 and the two front wheels 3.

The right front fender 223R provided with the above-mentioned right projecting portion 223dR may be fixed to a right outer tube 312 of a right shock absorber 33 (one example of the lower portion of the right shock absorber). The left front fender 223L provided with the above-mentioned left projecting portion 223dL may be fixed to a left outer tube 322 of a left shock absorber 35 (one example of the lower portion of the left shock absorber).

The terms and expressions that are used herein are used to describe the embodiments of the invention and hence should not be construed as limiting the scope of the invention. It should be understood that any equivalents to the characteristic matters that are shown and described herein should not be excluded and that various modifications made within the scope of claims to be made later are permitted.

The expressions "divide" and "separate" used in the above explanations are not intended to exclusively mean a case where the function to cover at least part of the link mechanism 5 is completely divided or separated from the function to contribute to the wind pressure reduction. It is not excluded a case where the link cover part has the function to contribute to the wind pressure reduction. It is not excluded a case where the aerodynamic part has the function to cover at least part of the link mechanism.

When referred to in this specification, the "parallel" line also includes two straight lines which do not intersect each other as members while they are inclined within the range of ± 40 degrees. When referred to in relation to the "direction," and the "member" in the invention, the term "along" also includes a case where the direction and the member are inclined within the range of ± 40 degrees. When referred to in relation to the "direction" in the invention, the term "extend" also includes a case where the direction is inclined within the range of ±40 degrees.

The invention can be implemented with many different embodiments. The invention can be implemented with many different embodiments. This disclosure should be regarded as provision of the embodiments based on the principle of the invention. Based on the understanding that the preferred embodiments which are described and/or illustrated herein are not intended to limit the invention thereto, several embodiments are described and illustrated herein.

Several illustrated embodiments of the invention are described herein. The invention is not limited to the various preferred embodiments that are described herein. Matters limited by claims should be construed based on terms that are used in the claims and should not be limited to the embodiments described in this description or the prosecution of this patent application. The embodiments should be construed to be non-exclusive. For example, in this disclosure, the terms "preferable" and "good" should be construed as being non-exclusive and those terms mean, respectively, "preferable but not limited thereto" and "good but not limited thereto."

The vehicle according to the invention is a vehicle comprising a leanable vehicle body frame and two front wheels. The number of rear wheels is not limited to one, and may be two.

In this embodiment, a center in the left-right direction of the vehicle body frame 21 of the rear wheel 4 coincides with a center in the left-right direction of the vehicle body frame 21 of the space defined between the right front wheel 31 and the left front wheel 32. Although the configuration described above is preferable, the center in the left-right direction of the vehicle body frame 21 of the rear wheel 4 does not have to coincide with the center in the left-right direction of the vehicle body frame 21 of the space defined between the right front wheel 31 and the left front wheel 32.

The link mechanism 5 may further include a cross member other than the upper cross member 51 and the lower cross member 52. The "upper cross member", and the "lower cross member" are merely so called based on their relative positions in the up-down direction. The upper cross member is not necessarily an uppermost cross member of the link mechanism 5. The upper cross member means a cross member that lies above another cross member that lies below. The lower cross member is not necessarily a lowermost cross member of the link mechanism 5. The lower cross member means a cross member that lies below another cross member that lies above. At least one of the upper cross member 51 and the lower cross member 52 may be made up of two parts such as a right cross member and a left cross member. In this way, the upper cross member 51 and the lower cross member 52 may be made up of a plurality of cross members, as long as the linkage function is realized.

The portion that serves as the aerodynamic part does not have to be the front spoiler 222, the right projecting portion 223dR, and the left projecting portion 223dL that are included in the vehicle body cover 22. The aerodynamic part may be constituted by a plurality of rods or a group of fins, as long as it is possible to ensure the function for reducing the wind pressure received by, during the traveling of the vehicle, by at least one of part of the vehicle body frame, part of the vehicle body cover and part of the power unit, any one of which is located below the link mechanism in the up-down direction of the vehicle body frame, on the left of the right front wheel in the left-right direction of the vehicle body frame, on the right of the left front wheel in the left-right direction of the vehicle body frame, and behind the right front wheel and the left front wheel in the front-rear direction of the vehicle body frame, as seen from front of the vehicle in the front-rear direction of the vehicle body frame under the condition that the vehicle body frame is in the upright state. Here, the material forming the aerodynamic part is not limited to resins but metals or the like may be used.

## Claims

1. A vehicle comprising:
a vehicle body frame (21);
a handlebar (23) provided so as to be able to turn relative to the vehicle body frame (21);
a right front wheel (31) and a left front wheel (32) arranged side by side in a left-right direction of the vehicle body frame (21);
a steering mechanism (7) configured to transmit turning of the handlebar (23) to the right front wheel (31) and the left front wheel (32);
a link mechanism (5) disposed above the right front wheel (31) and the left front wheel (32), and configured to cause the vehicle body frame (21) to lean relative to a vertical direction by changing positions of the right front wheel (31) and the left front wheel (32) relative to the vehicle body frame (21); and
a power unit (25) supported by the vehicle body frame (21) and including a drive source, wherein the steering mechanism (7) includes:
a right shock absorber (33,33A) supporting the right front wheel (31) at a lower portion (312,316A) of the right shock absorber (33,33A), and configured to buffer displacement of the right front wheel (31) in the up-down direction of the vehicle body frame (21) relative to an upper portion (316,312A,341) of the right shock absorber (33,33A); and
a left shock absorber (35,35A) supporting the left front wheel (32) at a lower portion (322,326A) of the left shock absorber (35,35A), and configured to buffer displacement of the left front wheel (32) in the up-down direction of the vehicle body frame (21) relative to an upper portion (326,322A,361) of the left shock absorber (35,35A), **characterized by** a vehicle body cover (22) at least part of which covers the vehicle body frame (21);
wherein the vehicle body cover (22) includes:
a link cover part (221) covering at least part of the link mechanism (5), being provided so as not to be able to displace relative to the vehicle body frame (21), having a front portion (221a) disposed ahead of respective rear ends (WB) of the right front wheel (31) and the left front wheel (32) in a front-rear direction of the vehicle body frame (21), and as seen from front of the vehicle in the front-rear direction of the vehicle body frame (21) of the vehicle under a condition that the vehicle body frame (21) is in an upright state, being arranged such that a front end (CF) of the front portion (221a) is disposed behind respective front ends (WF) of the right front wheel (31) and the left front wheel (32) in the front-rear direction of the vehicle body frame (21), under a condition that the vehicle body frame (21) is in an upright state; and
an aerodynamic part (222) configured to reduce wind pressure received, during travelling of the vehicle, by at least one of part of the vehicle body frame (21), part of the vehicle body cover (22), and part of the power unit (25), any one of which is located below the link mechanism (5) in an up-down direction of the vehicle body frame (21), on the left of the right front wheel (31) in a left-right direction of the vehicle body frame (21), on the right of the left front wheel (32) in the left-right direction of the vehicle body frame (21), as seen from a front side in the front-rear direction of the vehicle body frame (21) of the vehicle under the condition that the vehicle body frame (21) is in the upright state, and is located behind the right front wheel (31) and the left front wheel (32) in the front-rear direction of the vehicle body frame (21), as seen from sideways of the vehicle body frame (21) of the vehicle under the condition that the vehicle body frame (21) is in the upright state, provided so as to be able to displace relative to the vehicle body frame (21) in accordance with operation of the steering mechanism (7), and arranged such that a lower end (SD) of the aerodynamic part (222) is disposed below a lower end (CD) of the front portion (221a) of the link cover part (221),
at least part of the aerodynamic part (222) is disposed below the link mechanism (5) in the up-down direction of the vehicle body frame (21), and disposed between the right front wheel (31) and the left front wheel (32), as seen from front of the vehicle in the front-rear direction of the vehicle body frame (21) under the condition that the vehicle body frame (21) is in the upright state,
wherein at least part of the aerodynamic part (222) is disposed between the right shock absorber (33,33A) and the left shock absorber (35,35A), as seen from front of the vehicle in the front-rear direction of the vehicle body frame (21) under the condition that the vehicle body frame (21) is in the upright state.

2. The vehicle as set forth in claim 1, **characterized in that** a front edge (222a) of the aerodynamic part (222) as a contour portion that extends from an upper end (222b) to a lower end (222c) is so slanted that at least one of the upper end (222b) of said front edge (222a) and the lower end (222c) of said front edge (222a) is located behind a front end (222d) of the front edge (222a), as seen from the sideways of the vehicle body frame (21) of the vehicle under the condition that the vehicle body frame (21) is in the upright state.

3. The vehicle as set forth in claim 1 or 2, **characterized in that** a front edge (222a) of the aerodynamic part (222) as a contour portion that extends from a right end (222e) to a left end (222f) is so slanted that at least one of the right end (222e) of said front edge (222a) and the left end (222f) of said front edge (222a) is located behind a front end (222d) of the front edge (222a), as seen from above of the vehicle body frame (21) of the vehicle under the condition that the vehicle body frame (21) is in the upright state.

4. The vehicle as set forth in any one of claims 1 to 3, **characterized in that** the lower end (CD) of the front portion (221a) of the link cover part (221) is disposed above respective upper ends (WU) of the right front wheel (31) and the left front wheel (32) in the up-down direction of the vehicle body frame (21), under the condition that the vehicle body frame (21) is in the upright state.

5. The vehicle as set forth in any one of claims 1 to 4, **characterized in that** the lower end (CD) of the aerodynamic part (222) is disposed below respective upper ends (WU) of the right front wheel (31) and the left front wheel (32) in the up-down direction of the vehicle body frame (21), under the condition that the vehicle body frame (21) is in the upright state.

6. The vehicle as set forth in any one of claims 1 to 5, **characterized in that** at least part of the aerodynamic part (222) is disposed behind the respective front ends (WF) of the right front wheel (31) and the left front wheel (32) in the front-rear direction of the vehicle body frame (21), under the condition that the vehicle body frame (21) is in the upright state.

7. The vehicle as set forth in claim 6, **characterized in that** the steering mechanism (7) includes a steering shaft (60) to which the handlebar (23) is attached; and
wherein at least part of the aerodynamic part (222) is disposed ahead of the steering shaft (60) in the front-rear direction of the vehicle body frame (21), under the condition that the vehicle body frame (21) is in the upright state.

8. The vehicle as set forth in any one of claims 1 to 7, **characterized in that** the steering mechanism (7) includes:
a right bracket (317) to which the upper portion (316,312A,341) of the right shock absorber (33,33A) is fixed;
a left bracket (327) to which the upper portion (326,322A,361) of the left shock absorber (35,35A) is fixed;
a steering shaft (60) to which the handlebar (23) is attached; and
a transmission mechanism (6) configured to transmit turning of steering shaft (60) to the right bracket (317) and the left bracket (327); and
wherein the aerodynamic part (222) is fixed to any one of the link mechanism (5), a pair of the right shock absorber (33,33A) and the left shock absorber (35,35A), a pair of the right bracket (317) and the left bracket (327), and the transmission mechanism (6).

9. The vehicle as set forth in claim 8, **characterized in that** the aerodynamic part (222) is fixed to the upper portion of the right shock absorber (33,33A) and the upper portion of the left shock absorber (35,35A).

10. The vehicle as set forth in any one of claims 1 to 9, **characterized in that** at least part of the aerodynamic part (222) is disposed at center in the left-right direction of the vehicle body frame (21), as seen from front of the vehicle in the front-rear direction of the vehicle body frame (21) under the condition that the vehicle body frame (21) is in the upright state.

11. The vehicle as set forth in any one of claims 1 to 10, **characterized in that** the aerodynamic part (222) has a dimension in the up-down direction of the vehicle body frame (21) larger than a dimension in the left-right direction of the vehicle body frame (21), as seen from front of the vehicle in the front-rear direction of the vehicle body frame (21) under the condition that the vehicle body frame (21) is in the upright state.

## Patentansprüche

1. Ein Fahrzeug das umfasst:
einen Fahrzeug-Körper-Rahmen (21);
eine Lenk-Stange (23), die vorgesehen ist, sodass sie in der Lage ist relativ zu dem Fahrzeug-Körper-Rahmen (21) zu drehen;
ein rechtes Vorder-Rad (31) und ein linkes Vorder-Rad (32) die Seite an Seite in einer Links-Rechts-Richtung des Fahrzeug-Körper-Rahmens (21) angeordnet sind;
einen Lenkmechanismus (7), der konfiguriert ist um eine Drehung der Lenk-Stange (23) auf das rechte Vorder-Rad (31) und das linke Vorder-Rad (32) zu übertragen;
einen Lenkermechanismus (5), der oberhalb des rechtes Vorder-Rads (31) und des linken Vorder-Rads (32) positioniert ist, und konfiguriert ist den Fahrzeug-Körper-Rahmen (21) zu veranlassen sich links relativ zu einer Vertikal-Richtung zu neigen,
durch ändern von Positionen des rechten Vorder-Rads (31) und des linken Vorder-Rads (32) relativ zu dem Fahrzeug-Körper-Rahmen (21); und
eine Leistungs-Einheit (25), die durch den Fahrzeug-Körper-Rahmen (21) gelagert ist und eine Antriebsquelle beinhaltet, wobei der Lenkmechanismus (7) beinhaltet:
einen rechten Stoß-Dämpfer (33, 33A), welcher das rechte Vorder-Rad (31) an einem unteren Abschnitt (312, 316A) des rechten Stoß-Dämpfers (33, 33A) lagert und konfiguriert ist um Verlagerung des rechten Vorder-Rads (31) in der Oben-Unten-Richtung des Fahrzeug-Körper-Rahmens (21) relativ zu einem oberen Abschnitt (316, 312A, 341) des rechten Stoß-Dämpfers (33, 33A) abzufedern; und
einen linken Stoß-Dämpfer (35, 35A), welcher das linke Vorder-Rad (32) an einem unteren Abschnitt 322, 326a des linken Stoß-Dämpfers (35, 35A) lagert und konfiguriert ist um Verlagerung des linken Vorder-Rads (32) in die Oben-Unten-Richtung des Fahrzeug-Körper-Rahmens (21) relativ zu einem oberen Abschnitt (326, 322A, 361) des linken Stoß-Dämpfers (35, 35A) abzufedern, **gekennzeichnet durch** eine Fahrzeug-Körper-Abdeckung (22), zumindest ein Teil derselben deckt den Fahrzeug-Körper-Rahmen (21) ab;
wobei die Fahrzeug-Körper-Abdeckung (22) beinhaltet:
einen Lenker-Abdeckungs-Teil (221) der zumindest einen Teil des Lenkermechanismus (5) abdeckt, vorgesehen sodass dieser nicht in der Lage ist, sich relativ zu dem Fahrzeug-Körper-Rahmen (21) zu verlagern, aufweisend einen Vorder-Abschnitt (221a), angeordnet vor jeweiligen hinteren Enden (WB) des rechten Vorder-Rads (31) und des linken Vorder-Rads (32), in einer Vorder-Rück-Richtung des Fahrzeug-Körper-Rahmens (21), und wenn betrachtet von vorne von dem Fahrzeug in der Vorder-Rück-Richtung des Fahrzeug-Körper-Rahmens (21) des Fahrzeugs, unter einer Bedingung, dass der Fahrzeug-Körper-Rahmen (21) in einem aufrechten Zustand ist, angeordnet, sodass ein Vorder-Ende (CF) des Vorder-Abschnitts (221a) hinter jeweiligen Vorder-Enden (WF) des rechten Vorder-Rads (31) und des linken Vorder-Rads (32) in einer Vorder-Rück-Richtung des Fahrzeug-Körper-Rahmens (21) positioniert ist, unter einer Bedingung, dass der Fahrzeug-Körper-Rahmen (21) in einem aufrechten Zustand ist; und
einen Aerodynamik-Teil (222), der konfiguriert ist um Wind-Druck, aufgenommen während der Fahrt des Fahrzeugs, durch zumindest einen von Teil des Fahrzeug-Körper-Rahmens (21), Teil der Fahrzeug-Körper-Abdeckung (22), und Teil der Leistungs-Einheit (25), zu reduzieren, irgendeiner derselben ist unterhalb des Lenkermechanismus (5) in einer Oben-Unten-Richtung des Fahrzeug-Körper-Rahmens (21), Links von dem rechten Vorder-Rad (31) in einer Links-Rechts-Richtung des Fahrzeug-Körper-Rahmens (21), Rechts von dem linken Vorder-Rad (32) in der Links-Rechts-Richtung des Fahrzeug-Körper-Rahmens (21) angeordnet, wenn gesehen von einer Vorder-Seite in der Vorder-Rück-Richtung des Fahrzeug-Körper-Rahmens (21) des Fahrzeugs, unter der Bedingung, dass der Fahrzeug-Körper-Rahmen (21) in dem aufrechten Zustand ist,
und ist angeordnet hinter dem rechten Vorder-Rad (31) und dem linken Vorder-Rad (32), in der Vorder-Rück-Richtung des Fahrzeug-Körper-Rahmens (21), wenn gesehen von der Seite von dem Fahrzeug-Körper-Rahmen (21) von dem Fahrzeug, unter der Bedingung, dass der Fahrzeug-Körper-Rahmen (21) in dem Aufrechten Zustand ist, vorgesehen, sodass es in der Lage ist relativ zu dem Fahrzeug-Körper-Rahmen (21), in Übereinstimmung mit einem Betrieb des Lenkmechanismus (7), zu verlagern, und angeordnet, sodass ein unteres Ende (SD) des Aerodynamik-Teils (222) unterhalb einem unteren Ende (CD) des Vorder-Abschnitts (221a) des Lenker-Abdeckungs-Teils (221) positioniert ist,
zumindest ein Teil des Aerodynamik-Teils (222) ist unterhalb des Lenkermechanismus (5) in der Oben-Unten-Richtung des Fahrzeug-Körper-Rahmens (21) positioniert, und zwischen dem rechten Vorder-Rad (31) und dem linken Vorder-Rad (32) positioniert, gesehen von vorne von dem Fahrzeug in der Vorder-Rück-Richtung des Fahrzeug-Körper-Rahmens (21), unter der Bedingung, dass der Fahrzeug-Körper-Rahmen (21) in dem aufrechten Zustand ist,
wobei zumindest ein Teil des Aerodynamik-Teils (222) zwischen dem rechten Stoß-Dämpfer (33, 33A) und dem linken Stoß-Dämpfer (35, 35A) positioniert ist, gesehen von vorne von dem Fahrzeug in der Vorder-Rück-Richtung des Fahrzeug-Körper-Rahmens (21), unter der Bedingung, dass der Fahrzeug-Körper-Rahmen (21) in dem aufrechten Zustand ist.

2. Das Fahrzeug, wie festgelegt in Anspruch 1, **dadurch gekennzeichnet dass** eine Vorder-Kante (222a) des Aerodynamik-Teils (222), als ein Konturabschnitt, der sich von einem oberen Ende (222b) zu einem unteren Ende (222c) erstreckt, so geneigt ist, dass zumindest eines von dem oberen Ende (222b) von dieser Vorder-Kante (222a) und das untere Ende 222 von dieser Vorder-Kante (222a) hinter einem vorderen Ende (222d) der Vorder-Kante (222a) angeordnet ist, wenn gesehen von der Seite des Fahrzeug-Körper-Rahmens (21) des Fahrzeugs, unter der Bedingung, dass der Fahrzeug-Körper-Rahmen (21) in dem aufrechten Zustand ist.

3. Das Fahrzeug, wie festgelegt in Anspruch 1 oder 2, **dadurch gekennzeichnet dass** eine Vorder-Kante (222a) des Aerodynamik-Teils (222) als ein Konturabschnitt, der sich von einem rechten Ende (222d) zu einem linken Ende (222f) erstreckt, so geneigt ist, dass zumindest einer von dem rechten Ende (222e) von dieser Vorder-Kante (222a) und dem linken Ende (222f) und dieser Vorder-Kante (222a) hinter einem vorderen Ende (222d) der Vorder-Kante (222a) angeordnet ist, wenn gesehen von oben von dem Fahrzeug-Körper-Rahmen (21) von dem Fahrzeug, unter der Bedingung, dass der Fahrzeug-Körper-Rahmen (21) in dem aufrechten Zustand ist.

4. Das Fahrzeug, wie festgelegt in irgendeinem der Ansprüche 1 bis 3, **dadurch gekennzeichnet dass** das untere Ende (CD) des Vorder-Abschnitts (221a) des Lenker-Abdeckungs-Teils (221) oberhalb jeweiligen oberen Enden (WU) des rechten Vorder-Rads (31) und des linken Vorder-Rads (32), in der Oben-Unten-Richtung des Fahrzeug-Körper-Rahmens (21), positioniert ist, unter der Bedingung, dass der Fahrzeug-Körper-Rahmen (21) in dem aufrechten Zustand ist.

5. Das Fahrzeug, wie festgelegt in irgendeinem der Ansprüche 1 bis 4, **dadurch gekennzeichnet dass** das untere Ende (CD) des Aerodynamik-Teils (222) unterhalb jeweiliger oberer Enden (WU) des rechten Vorder-Rads (31) und des linken Vorder-Rads (32), in der Oben-Unten-Richtung des Fahrzeug-Körper-Rahmens (21), positioniert ist, unter der Bedingung, dass der Fahrzeug-Körper-Rahmen (21) in dem aufrechten Zustand ist.

6. Das Fahrzeug, wie festgelegt in irgendeinem der Ansprüche 1 bis 5, **dadurch gekennzeichnet dass** zumindest ein Teil von dem Aerodynamik-Teil (222) hinter jeweiligen Vorder-Enden (WF) des rechten Vorder-Rads (31) und des linken Vorder-Rads (32), in der Vorder-Rück-Richtung des Fahrzeug-Körper-Rahmens (21), positioniert ist, unter der Bedingung, dass der Fahrzeug-Körper-Rahmen (21) in dem aufrechten Zustand ist.

7. Das Fahrzeug, wie festgelegt in Anspruch 6, **dadurch gekennzeichnet dass** der Lenkmechanismus (7) eine Lenkwelle (60), an welcher die Lenk-Stange (23) angebracht ist, beinhaltet; und
wobei zumindest ein Teil des Aerodynamik-Teils (222) vor der Lenkwelle (60), in der Vorder-Rück-Richtung des Fahrzeug-Körper-Rahmens (21), positioniert ist, unter der Bedingung, dass der Fahrzeug-Körper-Rahmens (21) in dem aufrechten Zustand ist.

8. Das Fahrzeug, wie festgelegt in irgendeinem der Ansprüche 1 bis 7, **dadurch gekennzeichnet dass** der Lenkmechanismus (7) beinhaltet:
eine rechte Klammer (317), an welcher der obere Abschnitt (316, 312A, 341) des rechten Stoß-Dämpfers (33, 33A) fixiert ist;
eine linke Klammer (327), an welcher der obere Abschnitt (326, 322A, 361) des linken Stoß-Dämpfers (35, 35A) fixiert ist;
eine Lenkwelle (60), an welcher die Lenk-Stange (23) angebracht ist; und
einen Übertragungs-Mechanismus (6), der konfiguriert ist um Drehung der Lenkwelle (60) auf die rechte Klammer (317) und die linke Klammer (327) zu übertragen; und wobei der Aerodynamik-Teil (222) an irgendeinem von dem Lenkermechanismus (5), einem Paar von den rechten Stoß-Dämpfer (33, 33A) und dem linken Stoß-Dämpfer (35, 35A), einem Paar von der rechten Klammer (317) und der linken Klammer (327), und dem Übertragungs-Mechanismus (6) fixiert ist.

9. Das Fahrzeug, wie festgelegt in Anspruch 8, **dadurch gekennzeichnet dass** der Aerodynamik-Teil (222) an dem oberen Abschnitt des rechten Stoß-Dämpfers (33, 33A) und dem oberen Abschnitt des linken Stoß-Dämpfers (35, 35A) fixiert ist.

10. Das Fahrzeug, wie festgelegt in irgendeinem der Ansprüche 1 bis 9, **dadurch gekennzeichnet dass** zumindest ein Teil von dem Aerodynamik-Teil (222) an einer Mitte, in der Links-Rechts-Richtung des Fahrzeug-Körper-Rahmens (21), positioniert ist, wenn gesehen von vorne von dem Fahrzeug, in der Vorder-Rück-Richtung des Fahrzeug-Körper-Rahmens (21), unter der Bedingung, dass der Fahrzeug-Körper-Rahmen (21) in dem aufrechten Zustand ist.

11. Das Fahrzeug, wie festgelegt in irgendeinem der Ansprüche 1 bis 10, **dadurch gekennzeichnet das** der Aerodynamik-Teil (222) eine Abmessung in der Oben-Unten-Richtung des Fahrzeug-Körper-Rahmens (21) hat, größer als eine Abmessung in der Links-Rechts-Richtung des Fahrzeug-Körper-Rahmens (21), wenn gesehen von vorne von dem Fahrzeug in der Vorder-Rück-Richtung des Fahrzeug-Körper-Rahmens (21), unter der Bedingung, dass der Fahrzeug-Körper-Rahmen (21) in dem aufrechten Zustand ist.

## Revendications

1. Véhicule comprenant :
un cadre de véhicule (21) ;
un guidon (23) fournit de manière à pouvoir tourner par rapport au cadre de véhicule (21) ;
une roue avant droite (31) et une roue avant gauche (32) agencées côte à côte dans une direction gauche-droite du cadre de véhicule (21) ;
un mécanisme de direction (7) configuré pour transmettre une rotation du guidon (23) à la roue avant droite (31) et la roue avant gauche (32) ;
un mécanisme articulé (5) disposé au-dessus de la roue avant droite (31) et de la roue avant gauche (32), et configuré pour amener le cadre de véhicule (21) à s'incliner par rapport à une direction verticale en changeant des positions de la roue avant droite (31) et de la roue avant gauche (32) par rapport au cadre de véhicule (21); et
une unité d'alimentation (25) supportée par le cadre de véhicule (21) et comprenant une source d'entraînement,
dans lequel le mécanisme de direction (7) comprend :
un amortisseur droit (33, 33A) supportant la roue avant droite (31) au niveau d'une partie inférieure (312, 316A) de l'amortisseur droit (33, 33A), et configuré pour amortir un déplacement de la roue avant droite (31) dans la direction haut-bas du cadre de véhicule (21) par rapport à une partie supérieure (316, 312A, 341) de l'absorbeur de choc droit (33, 33A) ; et
un amortisseur gauche (35, 35A) supportant la roue avant gauche (32) au niveau d'une partie inférieure (322, 326A) de l'amortisseur gauche (35, 35A), et configuré pour amortir un déplacement de la roue avant gauche (32) dans la direction haut-bas du cadre de véhicule (21) par rapport à une partie supérieure (326, 322A, 361) de l'amortisseur gauche (35, 35A), **caractérisé par** un capot de cadre de véhicule (22) qui couvre au moins en partie le cadre de véhicule (21) ; dans lequel le capot de cadre de véhicule (22) comprend :
une partie de capot d'articulation (221) couvrant au moins une partie du mécanisme articulé (5), étant fournie de manière à ne pas pouvoir se déplacer par rapport au cadre de véhicule (21), ayant une partie avant (221a) disposée en avant d'extrémités arrière respectives (WB) de la roue avant droite (31 et de la roue avant gauche (32) dans une direction avant-arrière du cadre de véhicule (21) et, comme vu à partir de l'avant du véhicule dans la direction avant-arrière du cadre de véhicule (21) du véhicule dans une condition où le cadre de véhicule (21) est dans un état débout, agencée de telle sorte qu'une extrémité avant (CF) de la partie avant (221a) est disposée derrière des extrémités avant respectives (WS) de la roue avant droite (31) et de la roue avant gauche (32) dans la direction avant-arrière du cadre de véhicule (21), dans une condition où le cadre de véhicule (21) est dans un état debout ; et
une partie aérodynamique (222) configurée pour réduire une pression de vent reçue, pendant un déplacement du véhicule, par au moins une d'une partie du cadre de véhicule (21), d'une partie du capot de cadre de véhicule (22), et d'une partie de l'unité d'alimentation (25), dont une quelconque est située sous le mécanisme articulé (5) dans une direction haut-bas du cadre de véhicule (21), sur la gauche de la roue avant droite (31) dans une direction gauche-droite du cadre de véhicule (21), sur la droite de la roue avant gauche (32) dans la direction gauche-droite du cadre de véhicule (21), comme vu à partir d'un côté avant dans la direction avant-arrière du cadre de véhicule (21) du véhicule dans la condition où le cadre de véhicule (21) est dans l'état debout, et qui est située derrière la roue avant droite (31) et la roue avant gauche (32) dans la direction avant-arrière du cadre de véhicule (21), comme vu latéralement par rapport au cadre de véhicule (21) du véhicule dans la condition où le cadre de véhicule (21) est dans l'état debout, agencée de manière à pouvoir être déplacée par rapport au cadre de véhicule (21) selon un fonctionnement du mécanisme de direction (7), et agencée de sorte qu'une extrémité inférieure (SD) de la partie aérodynamique (222) est disposée sous une extrémité inférieure (CD) de la partie avant (221a) de la partie de capot d'articulation (221),
au moins une partie de la partie aérodynamique (222) est disposée en dessous du mécanisme articulé (5) dans la direction haut-bas du cadre de véhicule (21), et est disposée entre la roue avant droite (31) et la roue avant gauche (32), comme vu depuis l'avant du véhicule dans la direction avant-arrière du cadre de véhicule (21) dans la condition où le cadre de véhicule (21) est dans l'état debout,
dans lequel au moins une partie de la partie aérodynamique (222) est disposée entre l'amortisseur droit (33, 33A) et l'amortisseur gauche (35, 35A), comme vu depuis l'avant du véhicule dans la direction avant-arrière du cadre de véhicule (21) dans la condition où le cadre de véhicule (21) est dans l'état débout.

2. Véhicule selon la revendication 1, **caractérisé en ce qu'**un bord avant (222a) de la partie aérodynamique (222) en tant que partie de contour qui s'étend depuis une extrémité supérieure (222b) vers une extrémité inférieure (222c) est incliné de sorte qu'au moins une de l'extrémité supérieure (222b) dudit bord avant (222a) et de l'extrémité inférieure (222c) dudit bord avant (222a) est située derrière une extrémité avant (222d) du bord avant (222a), comme vu latéralement par rapport au cadre de véhicule (21) du véhicule dans la condition où le cadre de véhicule (21) est dans l'état debout.

3. Véhicule selon la revendication 1 ou 2, **caractérisé en ce qu'**un bord avant (222a) de la partie aérodynamique (222) en tant que partie de contour qui s'étend depuis une extrémité droite (222e) vers une extrémité gauche (222f) est incliné de sorte qu'au moins une de l'extrémité droite (222e) dudit bord avant (222a) et de l'extrémité gauche (222c) dudit bord avant (222a) est située derrière une extrémité avant (222d) du bord avant (222a), comme vu depuis le dessus du cadre de véhicule (21) du véhicule dans la condition où le cadre de véhicule (21) est dans l'état debout.

4. Véhicule selon l'une quelconque des revendications 1 à 3, **caractérisé en ce que** l'extrémité inférieure (CD) de la partie avant (221a) de la partie de capot d'articulation (21) est disposée au-dessus d'extrémités supérieures respectives (WU) de la roue avant droite (31) et de la roue avant gauche (32) dans la direction haut-bas du cadre de véhicule (21), dans la condition où le cadre de véhicule (21) est dans l'état debout.

5. Véhicule selon l'une quelconque des revendications 1 à 4, **caractérisé en ce que** l'extrémité inférieure (CD) de la partie aérodynamique (222) est disposée au-dessous d'extrémités supérieures respectives (WU) de la roue avant droite (31) et de la roue avant gauche (32) dans la direction haut-bas du cadre de véhicule (21), dans la condition où le cadre de véhicule (21) est dans l'état debout.

6. Véhicule selon l'une quelconque des revendications 1 à 5, **caractérisé en ce qu'**au moins une partie de la partie aérodynamique (22) est disposée derrière les extrémités avant respectives (WF) de la roue avant droite (31) et de la roue avant gauche (32) dans la direction avant-arrière du cadre de véhicule (21), dans la condition où le cadre de véhicule (21) est dans l'état debout.

7. Véhicule selon la revendication 6, **caractérisé en ce que** le mécanisme de direction (7) comprend un arbre de direction (60) auquel le guidon (23) est relié ; et
dans lequel au moins une partie de la partie aérodynamique (222) est disposée en avant de l'arbre de direction (60) dans la direction avant-arrière du cadre de véhicule (21), dans la condition où le cadre de véhicule (21) est dans l'état debout.

8. Véhicules selon l'une quelconque des revendications 1 à 7, **caractérisé en ce que** le mécanisme de direction (7) comprend :
un support droit (317) auquel la partie supérieure (316, 312A, 341) de l'amortisseur droit (33, 33A) est fixée ;
un support gauche (327) auquel la partie supérieure (326, 322A, 361) de l'amortisseur gauche (35, 35A) est fixée ;
un arbre de direction (60) auquel le guidon (23) est relié ; et
un mécanisme de transmission (6) configuré pour transmettre une rotation de l'arbre de direction (60) au support droit (317) et au support gauche (327) ; et
dans lequel la partie aérodynamique (222) est fixée à l'un quelconque du mécanisme articulé (5), d'une paire constituée de l'amortisseur droit (33, 33A) et de l'amortisseur gauche (35, 35A), d'une paire constituée du support droit (317) et du support gauche (327), et du mécanisme de transmission (6).

9. Véhicule selon la revendication 8, **caractérisé en ce que** la partie aérodynamique (222) est fixée à la partie supérieure de l'amortisseur droit (33, 33A) et à la partie supérieure de l'amortisseur gauche (35, 35A).

10. Véhicule selon l'une quelconque des revendications 1 à 9, **caractérisé en ce qu'**au moins une partie de la partie aérodynamique (222) est disposée au niveau du centre dans la direction gauche-droite du cadre de véhicule (21), comme vu depuis l'avant du véhicule dans la direction avant-arrière du cadre de véhicule (21) dans la condition où le cadre de véhicule (21) est dans l'état debout.

11. Véhicule selon l'une quelconque des revendications 1 à 10, **caractérisé en ce que** la partie aérodynamique (222) a une dimension dans la direction haut-bas du cadre de véhicule (21) supérieure à une dimension dans la direction gauche-droite du cadre de véhicule (21), comme vu depuis l'avant du véhicule dans la direction avant-arrière du cadre de véhicule (21), dans la condition où le cadre de véhicule (21) est dans l'état débout.
